# EUROPÄISCHE PATENTSCHRIFT

(11) **EP 2 456 565 B1**
(45) Veröffentlichungstag und Bekanntmachung des Hinweises auf die Patenterteilung: **23.11.2016**
(21) Anmeldenummer: 10746997.5
(22) Anmeldetag: 26.07.2010
(51) Int. Cl.: B05B 3/10

(54) **ROTATIONSZERSTÄUBER MIT SPRÜHGLOCKE UND VERLIERSICHERUNG**
ROTARY ATOMISER COMPRISING A SPRAYING CUP AND A SECURING RETENTION MECHANISM
PULVÉRISATEUR ROTATIF COMPRENANT UN BOL DE PULVÉRISATION ET UN DISPOSITF ANTI-PERTE

(30) Priorität: 24.07.2009 DE 102009034645; 30.03.2010 DE 102010013414; 05.05.2010 WO PCT/EP2010/002764
(43) Veröffentlichungstag der Anmeldung: 30.05.2012
(73) Patentinhaber: Dürr Systems AG, 74321 Bietigheim-Bissingen (DE)
(72) Erfinder: SEIZ, Bernhard, 74348 Lauffen (DE); HERRE, Frank, 71739 Oberriexingen (DE); BAUMANN, Michael, 74223 Flein (DE); KRUMMA, Harry, 74357 Bönnigheim (DE); NOLTE, Hans-Jürgen, 74354 Besigheim (DE); MICHELFELDER, Manfred, 71711 Höpfigheim (DE); MELCHER, Rainer, 71720 Oberstenfeld (DE); BEYL, Timo, 74354 Besigheim (DE); SCHOLL, Stephan, 3360 Herzogenbuchsee (CH)
(74) Vertreter: Kotitschke, Bernd
(86) Internationale Anmeldenummer: PCT/EP2010/004569
(87) Internationale Veröffentlichungsnummer: WO 2011/009641

(56) Entgegenhaltungen:
- EP-A2- 1 674 161
- DE-A1- 3 714 148
- DE-C1- 19 521 755
- JP-A- 11 028 391
- US-A- 5 685 495
- US-A1- 2005 172 892
- US-A1- 2007 090 204

## Beschreibung

Die Erfindung betrifft eine Sprühkörperwelle, insbesondere eine Glockentellerwelle für einen Rotationszerstäuber. Weiterhin betrifft die Erfindung einen entsprechend angepassten Absprühkörper, insbesondere in Form einen Glockentellers. Ferner betrifft die Erfindung ein Abwurfsicherungselement zur Abwurfsicherung eines Absprühkörpers, insbesondere in Form eines Glockentellers, und einen entsprechend angepassten Absprühkörper, an dem das Abwurfsicherungselement vorzugsweise lösbar montierbar ist.

US 2007/0090204 A1 offenbart einen Glockenteller für einen Rotationszerstäuber. Der Glockenteller weist ein Gewinde zum Anschrauben an einen Hohlschaft eines Rotationszerstäuber auf. Der Glockenteller weist ferner einen geschlitzten Ring auf, der im Betrieb aufgrund der Fliehkraft expandiert. EP 1 674 161 A2 offenbart einen ähnlichen Ring, der im Betrieb aufgrund der Fliehkraft expandiert. Die Druckschriften JP 11 028391 A, US 5 685 495 A, DE 37 14 148 A1, US 2005/172892 A1 und DE 195 21 755 C1 offenbaren weiteren allgemeinen Stand der Technik.

In modernen Lackieranlagen zur Lackierung von Kraftfahrzeugkarosseriebauteilen werden als Applikationsgerät in der Regel Rotationszerstäuber eingesetzt, die als Absprühkörper einen rotierenden Glockenteller aufweisen. Der Glockenteller ist hierbei in der Regel mittels einer Schraubverbindung an der Glockentellerwelle des Rotationszerstäubers montiert, wobei die lösbare Schraubverbindung einen verschleißbedingten Austausch des Glockentellers ermöglicht, der regelmäßig zu Reinigungszwecken demontiert wird. Darüber hinaus bewirkt die Schraubverbindung auch eine Zentrierung des Glockentellers in der Turbinenhohlwelle.

Nachteilig an dieser herkömmlichen Glockentellerbefestigung mittels einer Schraubverbindung ist zunächst die Verschmutzungsneigung des Außengewindes des Glockentellers und des Innengewindes der Glockentellerwelle. Dies ist besonders störend, weil diese Gewinde nur mit einem hohen Zeitaufwand gereinigt werden können.

Ein weiterer Nachteil der herkömmlichen Glockentellerbefestigung besteht darin, dass zum Aufschrauben des Glockentellers in der Regel mindestens fünf Umdrehungen des Glockentellers relativ zu der Glockentellerwelle erforderlich sind, um eine belastbare Schraubverbindung zu bilden. Bei einem verschleiß- oder reinigungsbedingten Austausch des Glockentellers sind ebenfalls entsprechend viele Umdrehungen des Glockentellers relativ zu der Glockentellerwelle erforderlich, um den Glockenteller von der Glockentellerwelle zu lösen.

Darüber hinaus besteht bei der herkömmlichen Glockentellerbefestigung mittels einer Verschraubung die Gefahr, dass sich der Glockenteller bei einem ruckartigen Bremsen des Glockentellers bei einem Blockieren der Lagereinheit ungewollt löst, was bei den im Betrieb auftretenden hohen Drehzahlen von ungefähr 8.000-80.000 U/min äußerst gefährlich ist.

Ferner führt eine Verschmutzung des Glockentellergewindes zu einer mechanischen Unwucht, was mit einer entsprechenden mechanischen Belastung der Lagereinheit verbunden ist und im Extremfall zu einem Ausfall der Lagereinheit führen kann.

Schließlich besteht bei der herkömmlichen Glockentellerbefestigung mittels einer Verschraubung die Gefahr, dass das Glockentellergewinde festfrisst und dadurch blockiert. Eine Demontage des Glockentellers ist dann nicht mehr möglich.

Der Erfindung liegt deshalb die Aufgabe zugrunde, eine entsprechend verbesserte Glockentellerbefestigung zu schaffen.

Diese Aufgabe wird durch den Gegenstand der unabhängigen Ansprüche gelöst.

Die Erfindung ist jedoch nicht auf Ausführungsformen beschränkt, die sämtliche eingangs genannten Nachteile des Standes der Technik beseitigen. Vielmehr beansprucht die Erfindung auch allgemein Schutz für die nachstehend beschriebenen Ausführungsformen.

Weiterhin ist zu erwähnen, dass die Erfindung im Folgenden teilweise konkret für einen Rotationszerstäuber beschrieben wird, der als Absprühkörper einen Glockenteller aufweist. Die Erfindung eignet sich jedoch auch für andere Typen von Rotationszerstäubern (z.B. Scheibenzerstäuber) mit anderen Absprühkörpern (z.B. Rotationsscheiben). Die Beschreibung der Erfindung beschränkt den Schutzbereich deshalb nicht auf Rotationszerstäuber mit einem Glockenteller als Absprühkörper, sondern umfasst allgemein auch anderen Typen von Rotationszerstäubern.

Es ist möglich, dass der Absprühkörper zusätzlich zu einer Verschraubung oder anstelle der Verschraubung eine Befestigungseinrichtung aufweist, um den Absprühkörper an der Sprühkörperwelle vorzugsweise lösbar zu montieren. Insbesondere ist es möglich, dass der Absprühkörper zusätzlich zu einer Verschraubung, um den Absprühkörper an der Sprühkörperwelle vorzugsweise lösbar zu montieren, eine Befestigungseinrichtung aufweist.

Es ist möglich, dass die Sprühkörperwelle zusätzlich zu einer Verschraubung oder anstelle der Verschraubung eine Befestigungseinrichtung aufweist, um den Absprühkörper an der Sprühkörperwelle vorzugsweise lösbar zu montieren. Insbesondere ist es möglich, dass die Sprühkörperwelle zusätzlich zu einer Verschraubung, um den Absprühkörper an der Sprühkörperwelle vorzugsweise lösbar zu montieren, eine Befestigungseinrichtung aufweist.

Die Befestigungseinrichtung ist bei einem Ausführungsbeispiel vorgesehen, um eine Abwurfsicherung für den Absprühkörper zu schaffen.

In einer Variante der Erfindung wird zur Befestigung des Absprühkörpers (z.B. Glockenteller) an der Sprühkörperwelle (z.B. Glockentellerwelle) die sogenannte Polygonspanntechnik eingesetzt, die an sich bereits bekannt ist und in DE 195 21 755 C1 beschrieben ist.

Die Erfindung umfasst deshalb in dieser Variante eine Sprühkörperwelle mit einer Klemmeinrichtung, um eine Klemmverbindung zwischen dem Absprühkörper und der Sprühkörperwelle herzustellen, wobei die Klemmeinrichtung so ausgebildet sein kann, wie in DE 195 21 755 C1 beschrieben ist.

Die erfindungsgemäße Sprühkörperwelle weist deshalb eine hohle Innenkontur auf, in die ein Montageschaft des Absprühkörpers axial eingeführt werden kann, um den Absprühkörper an der Sprühkörperwelle zu montieren.

Die Innenkontur der Sprühkörperwelle ist hierbei mittels der Klemmeinrichtung zwischen einer mechanisch unbelasteten Neutralstellung und einer mechanisch belasteten Montagestellung elastisch verformbar. In dem mechanisch belasteten Montagezustand entspricht die Innenkontur der Sprühkörperwelle im Wesentlichen der Außenkontur des Montageschafts des Absprühkörpers, so dass der Montageschaft des Absprühkörpers in die Innenkontur der Sprühkörperwelle eingeführt werden kann. Die Klemmeinrichtung wird also bei der Montage des Absprühkörpers eingesetzt, um die Innenkontur der Sprühkörperwelle so zu verformen, dass der Montageschaft des Glockentellers in die Sprühkörperwelle eingeführt werden kann. Nach dem Einführen des Montageschafts des Glockentellers löst die Klemmeinrichtung dann die Deformationskraft auf die Sprühkörperwelle, wodurch die Sprühkörperwelle elastisch in ihren Neutralzustand zurückfedert, was zu einer entsprechenden Klemmverbindung zwischen der Innenkontur der Sprühkörperwelle und dem Montageschaft des Absprühkörpers führt.

Hierbei entstehen in der Regel linienförmige Berührungskontakte zwischen der Mantelfläche des Montageschafts des Absprühkörpers einerseits und der Innenkontur der Sprühkörperwelle andererseits.

In dem bevorzugten Ausführungsbeispiel dieser Variante weist die Klemmeinrichtung eine Spannbohrung auf, in die eine Spannschraube eingeschraubt werden kann, wobei die Innenkontur der Sprühkörperwelle beim Einschrauben der Spannschraube aus der Neutralstellung in die Montagestellung verformt wird. Die Spannbohrung zur Aufnahme der Spannschraube verläuft vorzugsweise in der Drehebene der Sprühkörperwelle und/oder zu der Drehachse beabstandet.

Weiterhin ist zu erwähnen, dass die Innenkontur der Sprühkörperwelle in dieser Variante der Erfindung in dem Neutralzustand vorzugsweise polygonförmig und in dem Montagezustand im Wesentlichen zylindrisch ist, um eine Formanpassung an den zylindrischen Montageschaft des Absprühkörpers zu ermöglichen.

Darüber hinaus umfasst die Erfindung auch eine andere Variante einer erfindungsgemäßen Glockentellerbefestigung, wobei diese Variante teilweise der Glockentellerbefestigung entspricht, die in EP 1 674 161 A2 beschrieben ist.

Auch in dieser Variante der Erfindung weist die Sprühkörperwelle eine hohle Innenkontur mit einem Innengewinde auf, in das ein entsprechend angepasstes Außengewinde an dem Montageschaft des Absprühkörpers eingeschraubt werden kann.

Im Gegensatz zu den herkömmlichen Glockentellerbefestigungen mit einer Schraubverbindung erweitert sich das Innengewinde der Sprühkörperwelle hierbei über die Gewindelänge zu dem Absprühkörper hin. Mit anderen Worten verjüngt sich also das Innengewinde der Sprühkörperwelle mit zunehmender Einschraubtiefe.

Dementsprechend weist der Montageschaft des Absprühkörpers in dieser Variante mehrere axial oder unter einem definierten Winkel zur Achse verlaufende Schlitze auf, die von der Stirnseite des Montageschafts ausgehen und den Montageschaft an seinem distalen Ende in mehrere Schaftsektoren unterteilen, die radial nachgiebig sind, um sich an das konisch zulaufende Innengewinde der Sprühkörperwelle anzupassen. Beim Einschrauben des Montageschafts des Absprühkörpers in das konisch zulaufende Innengewinde der Sprühkörperwelle werden die einzelnen Schaftsektoren radial nach innen gedrückt. Hierbei ermöglichen die axial verlaufenden Schlitze in dem Montageschaft des Absprühkörpers, dass die einzelnen Schaftsektoren radial nach innen ausweichen können.

Im Betrieb eines Glockentellers mit einer derartigen Glockentellerbefestigung werden die einzelnen Schaftsektoren durch die im Betrieb wirkende Fliehkraft radial nach außen gedrückt und erhöhen somit die Reibung bzw. die Vorspannung in der Schraubverbindung und damit auch die zum Lösen der Schraubverbindung erforderlichen Kräfte, Momente und somit die Lösearbeit.

Aufgrund der kegelförmigen Gewindeform in der Sprühkörperwelle entsteht mit zunehmender Gewindelänge ein größer werdender Spalt zwischen dem Gewindeaußendurchmesser des Außengewindes des Montageschafts des Absprühkörpers einerseits und dem Außendurchmesser des Innengewindes der Sprühkörperwelle andererseits. Dies bietet den Vorteil, dass Verschmutzungen in diesen Spalt ausweichen können und somit keinen Einfluss auf die Zentrierung des Absprühkörpers haben, so dass die Haltefunktion der Glockentellerbefestigung nicht beeinträchtigt wird.

Weiterhin ist zu erwähnen, dass die Schlitze zwischen den benachbarten Schaftsektoren bei dem erfindungsgemäßen Absprühkörper in dieser Variante der Erfindung vorzugsweise mit einem elastischen und/oder schwingungsdämpfenden Material gefüllt sind, beispielsweise einem Elastomer. Vorzugsweise ist das elastische bzw. schwingungsdämpfende Material hierbei durch einen Vulkanisationsprozess fest mit dem metallischen Werkstoff des Absprühkörpers verbunden, wodurch Mikroschwingungen gedämpft werden, die von Restunwuchten herrühren. Ferner kann das elastische und/oder schwingungsdämpfende Material vorgesehen sein, um beispielsweise Ablagerungen von Beschichtungsmittel oder anderen Medien in den Schlitzen zu vermeiden.

Es ist möglich, dass auf der Innenseite der Schaftsektoren ein die Schlitze abdichtender Ringkörper eingesetzt ist. Vorzugsweise sind dem Ringkörper in die Schlitze eingreifende Stege angeformt. Der Ringkörper ist vorzugsweise aus einem gummielastischen Material hergestellt.

In einer Ausführungsform dieser Erfindungsvariante weist das Innengewinde der Sprühkörperwelle einen über die Zahnspitzen gemessenen Nenndurchmesser auf, der über die Gewindelänge im Wesentlichen konstant ist, während der über die Zahntäler gemessene Kerndurchmesser über die Gewindelänge zu dem Absprühkörper hin zunimmt. Dies bedeutet, dass die Verbindungslinie der Zahnspitzen des Innengewindes der Sprühkörperwelle nicht parallel zu der Verbindungslinie der Zahntäler des Innengewindes der Sprühkörperwelle verläuft. Vielmehr schließen diese beiden Verbindungslinien in dieser Ausführungsform einen Winkel ein, der beispielsweise im Bereich von 0,5°-2° liegen kann.

In einer anderen Ausführungsform dieser Variante erweitern sich der Nenndurchmesser und der Kerndurchmesser des Innengewindes der Sprühkörperwelle dagegen zu dem Absprühkörper hin gleichermaßen. Dies bedeutet, dass die Verbindungslinie der Zahnspitzen des Innengewindes der Sprühkörperwelle parallel zu der Verbindungslinie der Zahntäler des Innengewindes der Sprühkörperwelle verläuft. Hierbei kann sich der Nenndurchmesser des Innengewindes der Sprühkörperwelle über die gesamte Gewindelänge hin konstant mit einem Winkel von 0,5°-1,5° hin zu dem Absprühkörper erweitern.

Das Gewinde ist vorzugsweise eine spezielles Gewinde, das beispielsweise ein vergrößertes Fußspiel aufweist, um Schmutz/Lackreste aufnehmen zu können bzw. die Schlitze sind so ausgeformt, dass aus dem Gewinde gepresster Lack aufgenommen werden kann.

In einer anderen Variante der Erfindung weist die Glockentellerbefestigung dagegen eine sogenannte Fliehkraftspannzange auf. Auch in dieser Variante verfügt die Sprühkörperwelle über eine hohle Innenkontur, in die ein Montageschaft des Absprühkörpers axial eingeführt werden kann, um den Absprühkörper an der Sprühkörperwelle zu montieren.

Bei einer bevorzugten Ausführungsform der Erfindung wird ein Abwurfsicherungselement zur Abwurfsicherung eines Absprühkörpers beispielsweise für einen Rotationszerstäuber, vorzugsweise einem Absprühkörper wie hierin offenbart, bereitgestellt. Das Abwurfsicherungselement kann zusätzlich zu einem Festmachmittel, um das Abwurfsicherungselement an dem Absprühkörper vorzugsweise lösbar zu montieren, insbesondere eine Befestigungseinrichtung aufweisen.

Die Befestigungseinrichtung des Abwurfsicherungselements bzw. des Absprühkörpers kann mindestens ein Rast- oder Reibelement aufweisen, um mit mindestens einem komplementären Rast- oder Reibelement an der Innenkontur einer vorzugsweise wie hierin offenbarten drehbaren Sprühkörperwelle, insbesondere einer Glockentellerwelle des Rotationszerstäubers, an der der Absprühkörper lösbar montierbar ist, eine Rast- oder Reibverbindung zu bilden, die im Betrieb aufgrund der im Betrieb auftretenden Fliehkraft entsteht und/oder verstärkt wird.

Das Abwurfsicherungselement, das an den Absprühkörper lösbar montierbar ist, ist insbesondere vorteilhaft, da ein defektes Abwurfsicherungselement keinen kompletten Austausch des Absprühkörpers erfordert, sondern lediglich den Austausch des Abwurfsicherungselements, das aber im Vergleich zu einem Absprühkörper wie z.B. einem Glockenteller wesentlich kostengünstiger hergestellt werden kann. Ferner ist vorteilhaft, dass der Absprühkörper und das Abwurfsicherungselement aus unterschiedlichen Materialen hergestellt sein können, die unterschiedlichen Anforderungen gerecht werden können.

Es ist möglich, dass das Abwurfsicherungselement einstückig an dem Absprühkörper ausgebildet ist.

Insbesondere ist es möglich, dass das mindestens eine Rast- oder Reibelement des Absprühkörpers und/oder des Abwurfsicherungselements mindestens eine elastische Zunge umfasst bzw. als mindestens eine elastische Zunge ausgebildet ist.

Besonders bevorzugt ist, dass das mindestens eine Rast- oder Reibelement an mindestens einer elastischen Zunge, vorzugsweise am freien Ende oder zumindest nahe dem freien Ende der mindestens Zunge, vorgesehen ist und/oder nach radial außen vorragt.

Vorzugsweise ist die mindestens eine elastische Zunge eine elastisch federnde Zunge.

Bei einer bevorzugten Ausführungsform werden mehrere, vorzugsweise drei oder sechs, Zungen und/oder mehrere, vorzugsweise drei oder sechs, Rast- oder Reibelemente vorgesehen, wobei die Zungen jeweils ein Rast- oder Reibelement umfassen.

Die Rastverbindung ist vorzugsweise eine formschlüssige Rastverbindung.

Ferner wird erfindungsgemäß ein Absprühkörper, insbesondere ein Glockenteller, für einen Rotationszerstäuber, bereitgestellt, wobei der Absprühkörper an einer vorzugsweise wie hierin offenbarten drehbaren Sprühkörperwelle, insbesondere an einer Glockentellerwelle, des Rotationszerstäubers vorzugsweise lösbar montierbar ist. Der Absprühkörper ist insbesondere vorgesehen, um das Abwurfsicherungselement lösbar zu montieren. Der Absprühkörper kann zusätzlich zu einer ersten Festmachstruktur, um den Absprühkörper an der Sprühkörperwelle zu montieren, eine zweite Festmachstruktur aufweisen, um das Abwurfsicherungselement vorzugsweise lösbar zu montieren. Die Erfindung umfasst auch die Ausführungsform, bei der das Abwurfsicherungselement an der zweiten Festmachstruktur lösbar montiert ist bzw. an dem Absprühkörper unlösbar und/oder einstückig vorgesehen ist.

Die Befestigungseinrichtung bzw. die Rast- oder Reibverbindung, die aufgrund der im Betrieb auftretenden Fliehkräfte entsteht und/oder verstärkt wird, dient vorzugsweise ausschließlich als Abwurfsicherung für den Absprühkörper und/oder ist vorzugsweise ausschließlich vorgesehen, um ein Abwerfen des Absprühkörpers im Betrieb zu verhindern, z.B. wenn der Festmachmechanismus, insbesondere die Verschraubung, zwischen Sprühkörperwelle und Absprühkörper versagt oder sich ungewollt löst.

Es ist möglich, dass die Rast- oder Reibverbindung erst im Betrieb aufgrund der im Betrieb auftretenden Fliehkräfte entsteht und/oder verstärkt wird, während wenn der Rotationszerstäuber, der Absprühkörper bzw. das Abwurfsicherungselement im Ruhezustand ist bzw. sich nicht dreht, vorzugsweise keine Rast- oder Reibverbindung vorliegt.

Darüber hinaus weisen die Innenkontur der Sprühkörperwelle und der Montageschaft des Absprühkörpers bzw. das Abwurfsicherungselement komplementäre Rastelemente auf, die im montierten Zustand und/oder erst durch die Fliehkraftwirkung eine formschlüssige Rastverbindung zwischen der Sprühkörperwelle und dem Absprühkörper bzw. dem Abwurfsicherungselement bilden.

Das Rast- oder Reibelement an der Innenkontur der Sprühkörperwelle umfasst zumindest zwei Taschen oder vorzugsweise kreisbogenförmige Nuten. Insbesondere können mindestens zwei, vorzugsweise drei Taschen oder Nuten vorgesehen werden. Vorzugsweise sind die Taschen oder Nuten so angeordnet, dass im Betrieb jeweils zwei Zungen bzw. zwei Rast- oder Reibelemente des Absprühkörpers oder des Abwurfsicherungselements in jeweils eine Tasche oder Nut gelangen, um die Rast- oder Reibverbindung auszubilden. Bei einer anderen Ausführungsform ist es möglich, dass das Rast- oder Reibelement an der Innenkontur der Sprühkörperwelle eine umlaufende Nut ist.

Es ist möglich, dass das Rast- oder Reibelement an der Innenkontur der Sprühkörperwelle einen keilförmigen Abschnitt umfasst, der insbesondere vorgesehen ist, um mindestens ein komplementäres Rast- oder Reibelement, das an dem Montageschaft des Absprühkörpers oder dem Abwurfsicherungselement zur Abwurfsicherung des Absprühkörpers angeordnet ist, zu hintergreifen.

Anstelle von Rastelementen können im Rahmen der Erfindung auch Reibelemente vorgesehen sein, die eine Reibverbindung bilden, wobei die Reibverbindung durch die im Betrieb auftretende Fliehkraft verstärkt wird. Zur Vereinfachung ist jedoch im Folgenden vereinzelt lediglich von Rastelementen die Rede.

Auch in dieser Variante der Erfindung kann die Sprühkörperwelle ein Innengewinde aufweisen, um mit einem entsprechend angepassten Außengewinde an dem Montageschaft des Absprühkörpers eine Schraubverbindung zu bilden, so dass die Glockentellerbefestigung sowohl eine Schraubverbindung als auch eine Rastverbindung aufweist. Auch hierbei besteht die Möglichkeit, dass die Rastverbindung erst durch die Wirkung der im Betrieb auftretenden Fliehkraft entsteht.

Die Rastverbindung ist hierbei vorzugsweise so ausgebildet, dass die Rastverbindung zwischen den komplementären Rastelementen des Absprühkörpers bzw. des Abwurfsicherungselements einerseits und der Sprühkörperwelle andererseits nur einrastet, wenn sich der Absprühkörper bzw. das Abwurfsicherungselement und die Sprühkörperwelle in einer bestimmten axialen Rastposition relativ zueinander befinden. Die Schraubverbindung zwischen dem Absprühkörper und der Sprühkörperwelle ermöglicht es hierbei, den Absprühkörper bzw. das Abwurfsicherungselement in axialer Richtung in die Rastposition zu bewegen, ohne dass eine axiale Anpresskraft auf den Absprühkörper bzw. das Abwurfsicherungselement ausgeübt werden muss. Hierzu ist es lediglich erforderlich, den Absprühkörper gegebenenfalls mit montiertem Abwurfsicherungselement auf die Sprühkörperwelle aufzuschrauben, wobei sich der Absprühkörper samt gegebenenfalls montiertem Abwurfsicherungselement aufgrund der Gewindesteigung der Schraubverbindung automatisch in axialer Richtung in die Rastposition bewegt.

Im Betrieb einer derartigen Glockentellerbefestigung werden die an dem Absprühkörper bzw. dem Abwurfsicherungselement angebrachten Rastelemente aufgrund der im Betrieb auftretenden Fliehkraft und/oder aufgrund ihrer Eigenelastizität mit einer bestimmten radialen Anpresskraft nach außen gegen das komplementäre Rastelement an der Innenkontur der Sprühkörperwelle gedrückt. Hierbei besteht die Möglichkeit, dass die Rastverbindung konstruktiv so gestaltet ist, dass diese radial wirkende Anpresskraft aufgrund der Geometrie der Rastverbindung in eine axiale Anzugskraft umgewandelt wird, die den Absprühkörper bzw. das Abwurfsicherungselement axial mit der Sprühkörperwelle verspannt und/oder so ausgeführt ist, dass durch die Fliehkraftwirkung auf die Rastnasen mit entsprechend ausgeführter Komplementärinnenkontur ein axialer Formschluss erzielt wird. Beispielsweise kann die Innenkontur der Sprühkörperwelle im Bereich der Rastverbindung so geformt sein, dass sich die Innenkontur in diesem Bereich zu dem Absprühkörper hin verjüngt. Wenn nun die Rastelemente an dem Absprühkörper bzw. dem Abwurfsicherungselement gegen diese geneigte Innenkontur der Sprühkörperwelle drücken, so erzeugt die Neigung der Innenkontur eine entsprechende axiale Anzugskraft. Bei einer Neigung der Innenkontur von 0° entsteht keine Axialkraft und es ergibt sich ein Formschluss.

In einem bevorzugten Ausführungsbeispiel dieser Erfindungsvariante ist das mindestens eine Rastelement, vorzugsweise die Rastelemente an dem Absprühkörper bzw. dem Abwurfsicherungselement als mindestens eine elastische Zunge ausgebildet, insbesondere als elastisch federnde Rastzunge oder Rastzungen. Die Rastzungen an dem Absprühkörper stehen von der zerstäuberseitigen Stirnseite des Montageschafts des Absprühkörpers axial hervor. Die einzelnen Rastzungen des Absprühkörpers sind hierbei vorzugsweise über den Umfang des Montageschafts des Absprühkörpers verteilt angeordnet und durch axial oder unter einem definierten Winkel zur Achse verlaufende Schlitze voneinander getrennt, so dass die einzelnen Rastzungen des Absprühkörpers im Betrieb aufgrund der im Betrieb auftretenden Fliehkräfte radial nach außen gedrückt werden.

Vorzugsweise weist der Montageschaft des Absprühkörpers die erste Festmachstruktur und/oder die zweite Festmachstruktur auf, wobei die erste Festmachstruktur ein erstes Gewinde sein kann und die zweite Festmachstruktur ein zweites Gewinde sein kann, die vorzugsweise koaxial zueinander angeordnet sind. Insbesondere kann das erste Gewinde ein Außengewinde sein, um mit einem entsprechend angepassten Innengewinde an der hohlen Innenkontur der Sprühkörperwelle eine Schraubverbindung zu bilden. Ferner kann auch das zweite Gewinde insbesondere ein Außengewinde sein, um mit einem entsprechend angepassten Innengewinde an dem Abwurfsicherungselement eine Schraubverbindung zu bilden.

Obwohl die hierin beschriebenen Verbindungsmechanismen zum lösbaren Verbinden vorzugsweise gewindeartige Verbindungen sind, können auch andere Verbindungsmechanismen wie z.B. Rast-, Schnapp- und/oder Klemmverbindungen oder andere lösbare Verbindungsmechanismen verwendet werden, um den Absprühkörper, die Sprühkörperwelle und/oder das Abwurfsicherungselement aneinander lösbar zu montieren.

Insbesondere sind das Festmachmittel des Abwurfsicherungselements und die zweite Festmachstruktur des Absprühkörpers vorgesehen, um lösbar aneinander montiert werden zu können, vorzugsweise mittels einer Schraubverbindung. Vorzugsweise ist das Festmachmittel ein Innengewinde und die zweite Festmachstruktur ein Außengewinde.

Es ist möglich, dass die mindestens eine Zunge des Abwurfsicherungselements von einer Stirnseite eines Basisteils des Abwurfsicherungselements im Wesentlichen axial hervorsteht. Insbesondere können die Zungen über den Umfang des Basisteils verteilt angeordnet und/oder durch Zwischenräume oder Schlitze voneinander getrennt sein.

Die Zwischenräume oder Schlitze zwischen den Zungen des Abwurfsicherungselements können bei einer Ausführungsform z.B. ausvulkanisiert werden, insbesondere mit einem elastischen und/oder schwingungsdämpfenden Material gefüllt werden, beispielsweise mit einem Elastomer. Vorzugsweise kann das elastische bzw. schwingungsdämpfende Material hierbei durch einen Vulkanisationsprozess fest mit Abwurfsicherungselement, insbesondere den Zungen verbunden werden.

Es ist möglich, dass die mindestens eine Zunge im Betrieb aufgrund der im Betrieb auftretenden Fliehkräfte vorzugsweise radial nach außen gedrückt wird.

Besonders bevorzugt ist, dass die Rast- oder Reibverbindung bei nachlassender Fliehkraft gelöst wird und/oder bei nicht vorhandener Fliehkraft gelöst ist, z.B. wenn der Rotationszerstäuber, der Absprühkörper bzw. die Sprühkörperwelle im Ruhezustand ist bzw. sich nicht dreht.

Insbesondere ist es möglich, dass im Ruhezustand bzw. bei nicht vorhandener Fliehkraft die mindestens eine Zunge bzw. das Rastelement des Absprühkörpers bzw. des Abwurfsicherungselements in das komplementäre Rastelement an der Innenkontur der Sprühkörperwelle nicht hineinragt, insbesondere sich die Zunge bzw. das Rastelement des Absprühkörpers bzw. des Abwurfsicherungselements und die Sprühkörperwelle, insbesondere das komplementäre Rastelement an der Innenkontur der Sprühkörperwelle, nicht kontaktieren.

Bei einer vorteilhaften Ausführungsform besteht im Ruhezustand bzw. bei nicht vorhandener Fliehkraft insbesondere keine mechanische Verbindung bzw. kein Berührungskontakt zwischen Sprühkörperwelle, insbesondere der Innenkontur davon, und Abwurfsicherungselement.

Es ist möglich, dass die mindestens eine Zunge an ihrem freien Ende oder zumindest nahe ihrem freien Ende einen nach radial innen und/oder in Umfangsrichtung angeordneten Vorsprung aufweist, um das Gewicht im Bereich des freien Endes zu erhöhen, wodurch die Fliehkraftwirkung im Betrieb gesteigert werden kann.

Vorzugsweise ist das Basisteil ein Ringteil und kann z.B. mehrere Zungen miteinander verbinden.

Es ist möglich, dass das Festmachmittel des Abwurfsicherungselements an einem von dem Basisteil im Wesentlichen axial hervorstehenden umlaufenden Vorsprung oder mehreren über den Umfang des Basisteils verteilt und durch Zwischenräume voneinander getrennt angeordneten Vorsprüngen vorgesehen ist. Vorzugsweise erstreckt sich die mindestens eine Zunge des Abwurfsicherungselements und der mindestens eine Vorsprung von dem Basisteil in entgegengesetzte Richtungen.

Es ist möglich, dass die mindestens eine Zunge ein Rast- oder Reibelement umfasst, das nach vorzugsweise radial außen vorragt und vorzugsweise am freien Ende oder zumindest nahe dem freien Ende der Zunge angeordnet ist, insbesondere um eine Anlage in Axialrichtung und/oder in Umfangsrichtung ausbilden zu können.

Wie erwähnt, ist das Rast- oder Reibelement an der Innenkontur der Sprühkörperwelle in Form von zwei oder mehr, vorzugsweise drei Taschen ausgeführt, insbesondere in Form nicht umlaufender, kreisbogenförmiger Nuten. Die Taschen oder Nuten sind dabei vorzugsweise vorgesehen, um eine komplementäre Anlage in Axialrichtung und/oder in Umfangsrichtung für das mindestens eine komplementäre Rast- oder Reibelement des Absprühkörpers bzw. des Abwurfsicherungselements auszubilden.

Insbesondere ist es möglich, dass die zumindest eine Zunge und/oder das zumindest eine Rast- oder Reibelement einen keilförmigen Abschnitt umfasst, der vorzugsweise vorgesehen ist, um mindestens ein komplementäres Rast- oder Reibelement an der Innenkontur der drehbaren Sprühkörperwelle zu hintergreifen.

Vorzugsweise kann das Abwurfsicherungselement im Wesentlichen rohrförmig ausgebildet werden und/oder eine im Wesentlichen kreisförmige Mantelfläche umfassen.

Bei einer Ausführungsform kann das Rast- oder Reibelement und/oder die zumindest eine Zunge an ihrem freien Ende oder zumindest nahe ihrem freien Ende nach außen über die kreisförmige Mantelfläche des Abwurfsicherungselements hervorstehen.

Es ist möglich, dass sich zumindest eine Zunge im Wesentlichen in Umfangsrichtung des Abwurfsicherungselements und/oder kreisbogenförmig erstreckt.

Die Erstreckung der mindestens einen Zunge in Umfangsrichtung des Abwurfsicherungselements ist vorzugsweise größer als in Axialrichtung des Abwurfsicherungselements.

Ferner ist es möglich, dass sich die zumindest eine Zunge und/oder das zumindest eine Rast- oder Reibelement in einer zur Mittelachse des Abwurfsicherungselements im Wesentlichen senkrechten Ebene erstreckt.

Es ist auch möglich, dass sich die zumindest eine Zunge unter einem definierten Winkel an oder in der kreisförmigen Mantelfläche des Abwurfsicherungselements erstreckt.

Die Mittelachse, die Axialrichtung und/oder die Umfangsrichtung bezieht sich auf den Absprühkörper, die Sprühkörperwelle und/oder das Abwurfsicherungselement. Üblicherweise sind der Absprühkörper, die Sprühkörperwelle und/oder das Abwurfsicherungselement koaxial zueinander anzuordnen, so dass deren Mittelachsen, Axialrichtungen und/oder Umfangsrichtungen im Betrieb einander entsprechen bzw. koaxial zu einander sind.

Ferner kann sich die zumindest eine Zunge zumindest abschnittsweise, vorzugsweise im Wesentlichen über ihre gesamte Längserstreckung, in der kreisförmigen Mantelfläche des Abwurfsicherungselements erstrecken, und/oder zumindest abschnittsweise von der kreisförmigen Mantelfläche des Abwurfsicherungselements aufgenommen werden, während das mindestens eine Rast- oder Reibelement vorzugsweise radial nach außen über die kreisförmige Mantelfläche hervorstehen kann.

Es ist möglich, dass die zumindest eine Zunge durch Schlitze in der kreisförmigen Mantelfläche des Abwurfsicherungselements ausgebildet wird.

Die Schlitze können im Wesentlichen U-förmig an der kreisförmigen Mantelfläche angeordnet werden.

Bevorzugt umfasst die zumindest eine Zunge ein freies Ende und ein gelagertes Ende in einer zur Mittelachse im Wesentlichen senkrechten Ebene. Insbesondere sind das gelagerte Ende und das freie Ende in Umfangsrichtung des Abwurfsicherungselements voneinander beabstandet.

Es ist möglich, dass das gelagerte Ende ein sich über die Axialrichtung des Abwurfsicherungselements erstreckender Abschnitt der kreisförmigen Mantelfläche des Abwurfsicherungselements ist, der z.B. im Wesentlichen geradlinig, gekrümmt oder ungefähr U-förmig ausgebildet sein kann.

Die zumindest eine Zunge und/oder das zumindest eine Rast- oder Reibelement kann vorgesehen sein, um im Betrieb aufgrund der im Betrieb auftretenden Fliehkräfte im Wesentlichen spiralarmförmig und/oder im Wesentlichen kreisbogenförmig aus der Mantelfläche des Abwurfsicherungselements vorzugsweise radial nach außen bewegt zu werden und/oder auf diese Art und Weise hervorzustehen.

Bevorzugt sind die Zungen durch die kreisförmige Mantelfläche des Abwurfsicherungselements voneinander getrennt bzw. in Aussparungen in der kreisförmigen Mantelfläche des Abwurfsicherungselements aufgenommen.

Die Zungen und/oder die Rast- oder Reibelemente sind vorzugsweise über den Umfang der kreisförmigen Mantelfläche des Abwurfsicherungselements angeordnet und/oder in einer zur Mittelachse des Abwurfsicherungselements im Wesentlichen senkrechten Ebene angeordnet.

Das Abwurfsicherungselement kann an einem Endbereich oder nahe einem Endbereich einen umlaufenden nach vorzugsweise radial außen vorragenden Bund umfassen, der insbesondere vorgesehen ist, um als Anlage für eine abgebrochene Zunge oder ein abgebrochenes Rast- oder Reibelement zu dienen, wodurch z.B. verhinderbar ist, dass diese in Kontakt mit einem drehenden Teil, insbesondere relativ zu einander drehenden Teilen (z.B. Farbrohr und Sprühkörperwelle bzw. Turbinenwelle) kommen, was zu einem Verklemmen oder anderen unerwünschten Effekten führen könnte.

Es ist ferner möglich, dass das Abwurfsicherungselement einen Ringkörper umfasst, der vorgesehen ist, um an der Innenseite des Abwurfsicherungselements angeordnet zu werden und/oder um als Anlage für eine abgebrochene Zunge oder ein abgebrochenes Rast- oder Reibelement zu dienen, wodurch z.B. verhinderbar ist, dass diese in Kontakt mit einem drehenden Teil (z.B. Absprühkörper und Sprühkörperwelle bzw. Turbinenwelle) kommen, was zu einem Verklemmen oder anderen unerwünschten Effekten führen könnte.

Der Ringkörper kann aus Kunststoff und/oder einem elastischen und/oder schwingungsdämpfenden Material ausgebildet sein. Vorzugsweise wird der Ringkörper auf der Innenseite der Schlitze der ringförmigen Mantelfläche des Abwurfsicherungselements eingesetzt.

Das mindestens eine (komplementäre) Rast- oder Reibelement des Absprühkörpers bzw. des Abwurfsicherungselements und das mindestens eine (komplementäre) Rast- oder Reibelement an der Innenkontur der Sprühkörperwelle können vorzugsweise eine formschlüssige Rastverbindung erzeugen, die insbesondere in Axialrichtung und/oder Umfangsrichtung wirken kann.

Wird das Rast- oder Reibelement an der Innenkontur der Sprühkörperwelle in Form einer umlaufenden Nut vorgesehen, so entfällt die Anlage in Umfangsrichtung und es verbleibt die Anlage in Axialrichtung, wodurch nur eine Rastverbindung in Axialrichtung erzeugbar ist.

Bei einer bevorzugten Ausführungsform der Erfindung ist das Abwurfsicherungselement, insbesondere die mindestens eine Zunge und/oder das mindestens eine Rast- oder Reibelement, aus Kunststoff oder Metall ausgebildet. Es ist möglich, dass zumindest ein Teil des verbleibenden Absprühkörpers bzw. der Absprühkörper an sich, insbesondere ein Glockenteller, oder der im Wesentlichen gesamte verbleibende Teil des Absprühkörpers aus einem vorzugsweise anderen Metall (z.B. Titan) ist.

Das Abwurfsicherungselement und der Absprühkörper sind vorzugsweise aus unterschiedlichen Materialen ausgebildet, um unterschiedlichen Anforderungen gerecht werden zu können. Einerseits ist es vorteilhaft, z.B. den Glockenteller per se aus Metall, insbesondere Titan, auszubilden. Für die Zungen ist Titan jedoch aufgrund der geringen Festigkeit eher nachteilig.

Schließlich umfasst die Erfindung auch eine andere Variante einer Glockentellerbefestigung, bei welcher der Absprühkörper mittels einer zentralen Spannschraube an der Sprühkörperwelle befestigt wird. Die zentrale Spannschraube wird hierbei durch eine Zentralbohrung in dem Glockenteller hindurchgeführt und mit einem Innengewinde der Sprühkörperwelle verschraubt. Der erfindungsgemäße Absprühkörper weist in dieser Variante einen axialen Anschlag auf, an dem sich die Spannschraube abstützen kann, um den Absprühkörper in axialer Richtung mit der Sprühkörperwelle zu verspannen.

Darüber hinaus ist in dieser Variante einer Glockentellerbefestigung vorzugsweise eine Verdrehsicherung vorgesehen, welche den Absprühkörper verdrehsicher mit der Sprühkörperwelle verbindet. Bei der Verdrehsicherung handelt es sich vorzugsweise um eine Stiftverbindung mit einem an dem einen Teil angebrachten axial verlaufenden Stift und einer in dem anderen Teil befindlichen axial verlaufenden Aufnahmebohrung für den Stift, wobei der Stift an dem einen Teil im montierten Zustand in die Aufnahmebohrung in dem anderen Teil eingreift und eine Verdrehung verhindert. Hierbei sind vorzugsweise über den Umfang verteilt mehrere derartige Stiftverbindungen rotationssymmetrisch angeordnet, um eine Unwucht zu vermeiden.

Bei den in der vorliegenden Beschreibung und/oder Ansprüchen erwähnten Gewinden (insbesondere Innen- und Außengewinden), Schraubverbindungen, Verschraubungen, etc. kann es sich insbesondere um Gewinde mit Sonderkonfiguration handeln, die in Dokument WO 2010/127850 beschrieben sind.

Weiterhin ist zu erwähnen, dass die Erfindung nicht auf den vorstehend beschriebenen Absprühkörper und die ebenfalls vorstehend beschriebene Sprühkörperwelle oder das Abwurfsicherungselement als einzelne Bauteile beschränkt ist. Vielmehr erfasst die Erfindung auch einen Absprühkörper mit vorzugsweise lösbar montiertem Abwurfsicherungselement und einen neuartigen Rotationszerstäuber mit einem derartigen Absprühkörper und/oder einer derartigen Sprühkörperwelle.

Schließlich umfasst die Erfindung auch eine Lackieranlage mit mindestens einem derartigen Rotationszerstäuber, der vorzugsweise von einem mehrachsigen Lackierroboter geführt wird.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1A: eine Querschnittsansicht einer erfindungsgemäßen Glockentellerbefestigung gemäß der sogenannten Polygonspanntechnik entlang der Schnittlinie A-A in Figur 1B,
- Figur 1B: eine Längsschnittansicht der Glockentellerbefestigung gemäß Figur 1A,
- Figur 2: eine Längsschnittansicht eines Rotationszerstäubers mit einer Glockentellerbefestigung mit einem konischen Innengewinde in der Glockentellerwelle,
- Figur 3: eine Perspektivansicht eines erfindungsgemäßen Glockentellers mit einer sogenannten Fliehkraftspannzange zur Befestigung des Glockentellers,
- Figur 4: eine Längsschnittansicht durch eine Glockentellerbefestigung mit einer zentralen Spannschraube,
- Figur 5: eine perspektivische Schnittansicht einer anderen Glockentellerwelle, einem anderen Glockenteller und einem Abwurfsicherungselement gemäß einem Ausführungsbeispiel der Erfindung,
- Figur 6: eine perspektivische Ansicht eines Ringkörpers gemäß einem Ausführungsbeispiel der Erfindung,
- Figur 7: eine perspektivische Ansicht eines anderen Abwurfsicherungselements gemäß einem Ausführungsbeispiel der Erfindung, und
- Figur 8: eine Vorderansicht des Abwurfsicherungselements gemäß Figur 7.

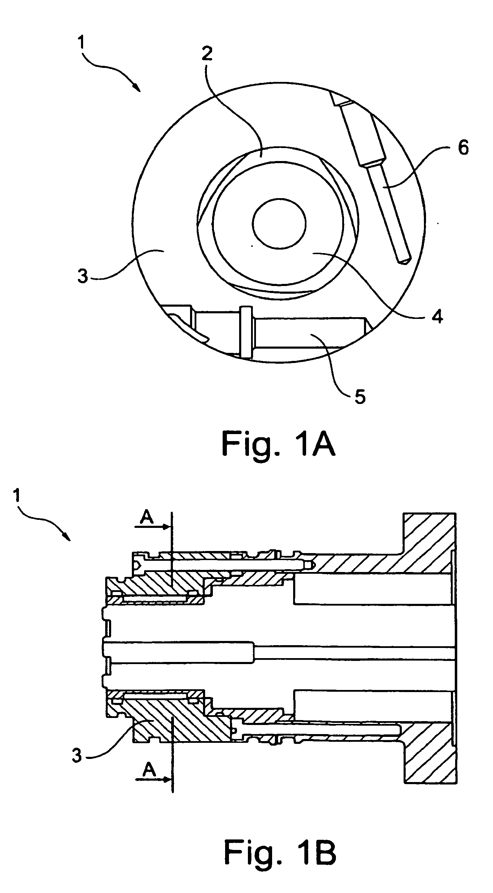

Die Figuren 1A und 1B zeigen eine erfindungsgemäße Glockentellerbefestigung 1 zur Befestigung eines Glockentellers an einem Rotationszerstäuber, wobei zur Vereinfachung weder der Glockenteller noch der Rotationszerstäuber dargestellt ist.

Die Glockentellerbefestigung 1 arbeitet gemäß der sogenannten Polygonspanntechnik, die beispielsweise in DE 195 21 755 C1 beschrieben ist.

In diesem Ausführungsbeispiel weist die Glockentellerbefestigung 1 eine drehbare, hohle Glockentellerwelle 2 auf, die in herkömmlicher Weise von einer Turbine angetrieben werden kann, was jedoch zur Vereinfachung nicht dargestellt ist. Zur Vermeidung von Missverständnissen wird darauf hingewiesen, dass es sich bei der Glockentellerwelle 2 um die Abtriebswelle der Lagereinheit der Turbine handelt und nicht um eine an dem Glockenteller angeformte Welle.

Die drehbare Glockentellerwelle 2 ist von einer feststehenden Spannhülse 3 umgeben, die es ermöglicht, die Glockentellerwelle 2 elastisch zu verformen, um einen Glockenteller zu montieren bzw. auszutauschen. So weist die Glockentellerwelle 2 in einem mechanisch unbelasteten Neutralzustand eine polygonförmige Innenkontur auf, wohingegen der zu montierende Glockenteller einen Montageschaft 4 mit einem zylindrischen Außenquerschnitt aufweist. In dem mechanisch unbelasteten Neutralzustand kann der Montageschaft 4 des Glockentellers also nicht in die Glockentellerwelle 2 eingeführt werden, da die Glockentellerwelle 2 dann keinen zylindrischen Innenquerschnitt aufweist. Zur Montage des Glockentellers und zum Austausch des Glockentellers muss die Glockentellerwelle 2 deshalb mittels der Spannhülse 3 vorübergehend so verformt werden, dass die Glockentellerwelle 2 einen zylindrischen Innenquerschnitt aufweist. Hierzu befinden sich in der Spannhülse 3 eine oder mehrere Spannbohrungen 5, 6, in die jeweils eine Spannschraube eingeschraubt werden kann, um den Druck auf das Hydraulikmedium zwischen der Spannhülse 3 und der Glockentellerwelle 2 zu erhöhen und dadurch nach Überwindung des Verformungswiderstands der Spannhülse 3 die Glockentellerwelle 2 entsprechend zu verformen.

Nach dem Einsetzen des Montageschafts 4 des Glockentellers in die Glockentellerwelle 2 kann die Spannhülse 3 dann wieder mittels der in die Spannbohrung 5, 6 eingesetzten Spannschrauben gelockert werden, woraufhin die Glockentellerwelle 2 wieder in ihre Ursprungsform mit einem polygonförmigen Innenquerschnitt elastisch zurückfedert. Zwischen der Innenkontur der Glockentellerwelle 2 und der Mantelfläche des Montageschafts 4 des Glockentellers entsteht dann aufgrund der Eigenelastizität der Glockentellerwelle 2 eine Klemmverbindung.

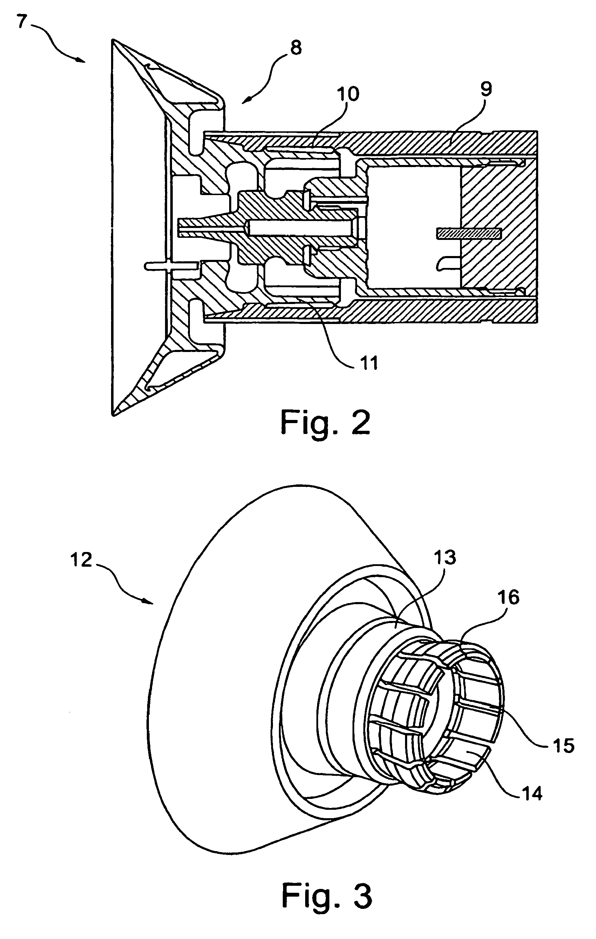

Figur 2 zeigt ein alternatives Ausführungsbeispiel eines erfindungsgemäßen Rotationszerstäubers 7 mit einem Glockenteller 8, der mittels einer neuartigen Glockentellerbefestigung an einer Glockentellerwelle 9 des Rotationszerstäubers 7 befestigt ist.

Die Glockentellerbefestigung gemäß Figur 2 stimmt teilweise mit der Glockentellerbefestigung gemäß EP 1 674 161 A2 überein.

Eine Besonderheit dieses Ausführungsbeispiels besteht darin, dass die Glockentellerwelle 9 an ihrem distalen Ende ein Innengewinde 10 aufweist, das sich konisch zu dem Glockenteller 8 hin erweitert. In diesem Ausführungsbeispiel beträgt der Konuswinkel des Innengewindes 10 in der Glockentellerwelle 9 1,5°, jedoch sind im Rahmen der Erfindung auch andere Konuswinkel möglich.

Der Glockenteller 8 weist entsprechend einen Montageschaft 11 auf, der ein Außengewinde trägt, das in das konische Innengewinde 10 der Glockentellerwelle 9 eingeschraubt werden kann. Der Montageschaft 11 des Glockentellers 8 ist hierbei hohl ausgeführt und weist axial oder unter einem zur Achse geneigten Winkel verlaufende Schlitze auf, die von dem zerstäuberseitigen Ende des Montageschafts 11 ausgehen und es ermöglichen, dass die einzelnen Schaftsektoren des Montageschafts 11 beim Einschrauben in das konische Innengewinde 10 der Glockentellerwelle 9 radial nach innen nachgeben.

Im Betrieb des Rotationszerstäubers 7 werden die einzelnen Schaftsektoren des Montageschafts 11 des Glockentellers 8 aufgrund der im Betrieb auftretenden Fliehkraft mit einer drehzahlabhängigen Anpresskraft radial nach außen gedrückt. Die Anpresskraft der Schaftsektoren erhöht hierbei die Gewindereibung und damit auch die zum Lösen der Schraubverbindung erforderliche Kraft. Dadurch wird vorteilhaft verhindert, dass sich der Glockenteller 8 im Betrieb löst, was beispielsweise bei einem ruckartigen Abbremsen des Glockentellers 8 passieren könnte.

Figur 3 zeigt einen erfindungsgemäßen Glockenteller 12 mit einer sogenannten Fliehkraftspannzange zur Befestigung des Glockentellers 12 an einer hohlen Glockentellerwelle eines Rotationszerstäubers, wobei der Rotationszerstäuber und die Glockentellerwelle zur Vereinfachung nicht dargestellt sind.

Zur Befestigung des Glockentellers 12 an der Glockentellerwelle weist der Glockenteller 12 einen zylindrischen Montageschaft mit einem Außengewinde 13 auf, wobei das Außengewinde 13 bei der Montage des Glockentellers 12 in ein entsprechend angepasstes Innengewinde der hohlen Glockentellerwelle einschraubt wird.

Weiterhin weist der Glockenteller 12 zur Befestigung an der Glockentellerwelle an dem distalen Ende seines Montageschafts zahlreiche axial hervorstehende Rastzungen 14 auf, die ringförmig über den Umfang verteilt angeordnet sind und jeweils durch ausvulkanisierte Schlitze 15 voneinander getrennt sind. Die Schlitze 15 ermöglichen es, dass die einzelnen Rastzungen 14 in radialer Richtung nach innen und nach außen federn, um eine Rastverbindung zu bilden.

Hierzu weisen die Rastzungen 14 an ihrer äußeren Mantelfläche jeweils ein Rastelement 16 auf, das im montierten Zustand mit einem komplementären Rastelement an der Innenwand der Glockentellerwelle eine Rastverbindung bildet. Hierzu weist die Glockentellerwelle an ihrer Innenwand eine axiale Hinterschneidung auf, hinter welche die Rastelemente 16 greifen und dadurch die Rastverbindung bilden.

Voraussetzung zum Einrasten der Rastverbindung ist hierbei, dass sich die einzelnen Rastelemente 16 der Rastzungen 14 relativ zu den komplementären Rastelementen an der Innenwand der Glockentellerwelle in einer bestimmten Rastposition befinden und/oder durch Fliehkraftwirkung erst zum Eingriff kommen. Die hierzu erforderliche Axialbewegung des Glockentellers 12 relativ zu der Glockentellerwelle kann durch Aufschrauben realisiert werden, ohne dass eine axiale Anpresskraft auf den Glockenteller 12 ausgeübt werden muss. Die Schraubverbindung mit dem Außengewinde 13 dient also nicht nur zur Herstellung einer sicheren Verbindung zwischen dem Glockenteller 12 und der Glockentellerwelle, sondern erleichtert auch das Herstellen der Rastverbindung.

Gemäß einer weiteren Ausführungsform der Erfindung kann in den zylindrischen Innenraum des geschlitzten Montageschafts ein Ringkörper eingesetzt werden, der mit seiner zylindrischen Außenfläche eng an der zylindrischen Innenwand des Montageschafts anliegt und somit die Schlitze 15 nach innen abdichtet. Vorzugsweise besteht der Ringkörper zu diesem Zweck aus gummielastischem Werkstoff.

Gemäß einer anderen nicht gezeigten Ausführungsform der Erfindung ist es möglich, dass die Schlitze 15 zwischen den benachbarten Schaftsektoren mit einem elastischen und/oder schwingungsdämpfenden Material gefüllt sind, beispielsweise einem Elastomer, wobei auf einen Ringkörper verzichtet werden kann, aber nicht muss.

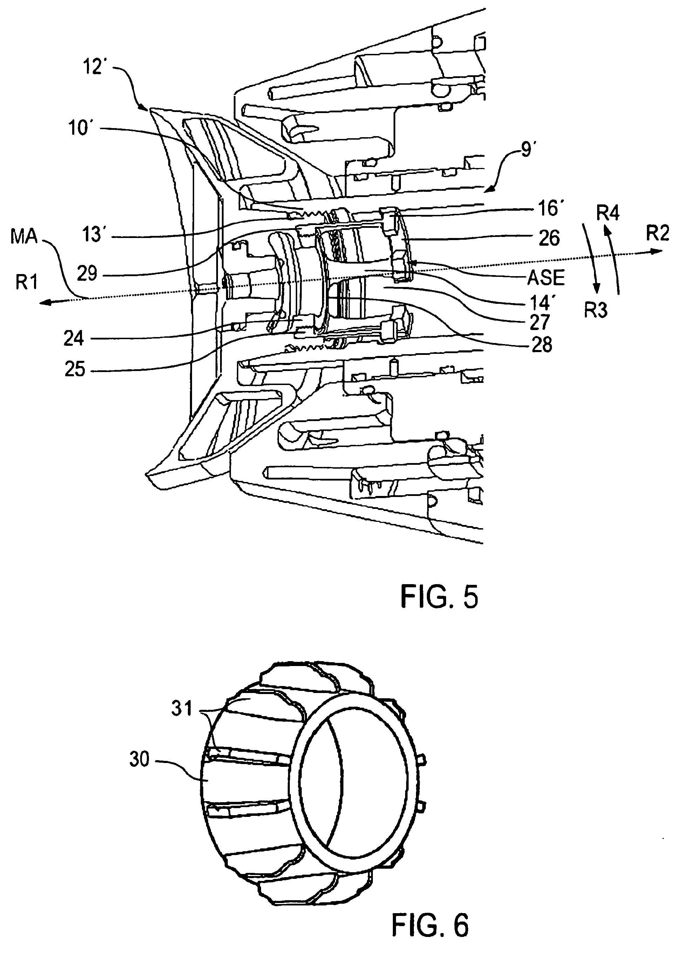

Figur 6 zeigt einen Ringkörper 30, dem vorzugsweise auf seiner Außenseite radial vorstehende flache Stege 31 angeformt sind, die so bemessen und angeordnet sein können, dass sie in die Schlitze 15 eingreifen und zumindest deren radial innere Bereiche vollständig ausfüllen können. Der Ringkörper 30 kann im Wesentlichen zylindrisch oder sich verjüngend ausgebildet sein. Die Stege 31 sind optional.

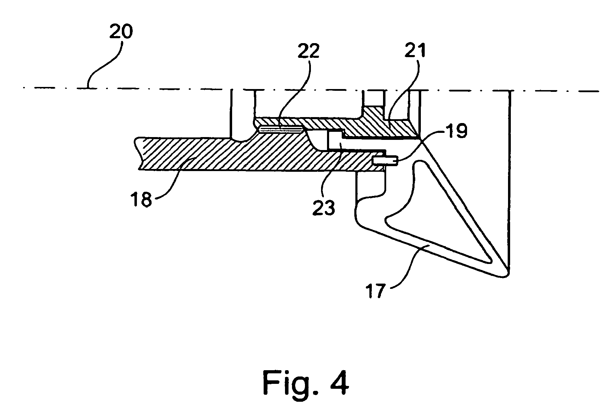

Figur 4 zeigt eine weitere Variante einer erfindungsgemäßen Glockentellerbefestigung, um einen Glockenteller 17 an einer hohlen Glockentellerwelle 18 zu befestigen.

Zum einen weist die Glockentellerbefestigung in dieser Variante eine Stiftverbindung 19 auf, um den Glockenteller 17 verdrehsicher mit der Glockentellerwelle 18 zu verbinden. Die Stiftverbindung 19 besteht aus jeweils einem Passstift, der in der Stirnseite der Glockentellerwelle 18 angeordnet ist und axial hervorsteht, sowie einer entsprechenden axial verlaufenden Aufnahmebohrung in dem Glockenteller 17. Hierbei sind mehrere derartige Stiftverbindungen 19 rotationssymmetrisch bezüglich einer Drehachse 20 über den Umfang verteilt angeordnet, um eine Unwucht zu vermeiden.

Zum anderen weist die Glockentellerbefestigung in dieser Variante der Erfindung eine zentrale Spannschraube 21 auf, die durch eine zentrale Bohrung in dem Glockenteller 17 axial hindurchgeführt wird und im montierten Zustand durch eine Schraubverbindung 22 mit der Glockentellerwelle 18 verbunden ist. Die Schraubverbindung 22 besteht aus einem Außengewinde an der Mantelfläche der Spannschraube 21 und einem entsprechend angepassten Innengewinde an der Innenwand der Glockentellerwelle 18.

Die Spannschraube 21 stützt sich hierbei an einem axialen Anschlag 23 an dem Glockenteller 17 ab, so dass die Spannschraube 21 den Glockenteller 17 axial mit der Glockentellerwelle 18 verspannt.

Darüber hinaus dient die Spannschraube 21 auch zur Befestigung einer Verteilerscheibe, die jedoch hier zur Vereinfachung nicht dargestellt ist.

Figur 5 zeigt eine perspektivische Schnittansicht einer anderen Glockentellerwelle 9', eines anderen Glockentellers 12' und eines Abwurfsicherungselements ASE zur Abwurfsicherung des Glockentellers 12' gemäß einem Ausführungsbeispiel der Erfindung. Das Ausführungsbeispiel gemäß Figur 5 stimmt teilweise mit den vorstehend beschriebenen Ausführungsbeispielen, insbesondere dem Ausführungsbeispiel gemäß Figur 3, überein, wobei ähnliche oder identische Teile mit dem gleichen Bezugszeichen, jedoch zusätzlich mit einem Apostroph versehen sind, und zu deren Erläuterung auch auf die Beschreibung der vorstehend beschriebenen Ausführungsbeispiele verwiesen wird, um Wiederholungen zu vermeiden. Bezugseichen R1 bzw. R2 kennzeichnet die Axialrichtung und Bezugszeichen R3 bzw. R4 die Umfangsrichtung der Glockentellerwelle 9', des Glockentellers 12' und/oder des Abwurfsicherungselements ASE.

Eine Besonderheit der in Figur 5 dargestellten Ausführungsform ist das eine Befestigungseinrichtung umfassende Abwurfsicherungselement ASE zur Abwurfsicherung des Glockentellers 12', das nach dem Prinzip der Fliehkraftspannzange funktioniert, und ein Glockenteller 12', der ausgebildet ist, um das Abwurfsicherungselement ASE lösbar zu montieren.

Der Glockenteller 12' umfasst zusätzlich zu einer ersten Festmachstruktur in Form eines ersten Außengewindes 13', um den Glockenteller 12' an der Glockentellerwelle 9' lösbar zu montieren, eine zweite Festmachstruktur in Form eines zweiten Außengewindes 24, um das Abwurfsicherungselement ASE lösbar zu montieren. Das erste Außengewinde 13' und das zweite Aussengwinde 24 des Glockentellers 12' sind an dem Montageschaft des Glockentellers 12' koaxial zueinander angeordnet, wobei das erste Außengewinde 13' einen größeren Radius aufweist als das zweite Außengewinde 24.

Das Aussengwinde 13' des Glockentellers 12' ist vorgesehen, um an einem entsprechend angepassten Innengewinde 10' an der Innenkontur der Glockentellerwelle 9' angeschraubt zu werden.

Das Abwurfsicherungselement ASE umfasst ein Festmachmittel in Form eines Innengewindes 25, das an dem zweiten Außengewinde 24 des Glockentellers 12' angeschraubt werden kann.

Das Abwurfsicherungselement ASE bzw. dessen Befestigungseinrichtung umfasst sechs Rast- oder Reibelemente 16', die an sechs elastischen Zungen 14' vorgesehen sind (vier davon sind in Figur 5 zu sehen). Die Zungen 14' sind durch Zwischenräume 27 voneinander getrennt. Die Zungen 14' bzw. die Rast- oder Reibelemente 16' sind vorgesehen, um im Betrieb des Rotationszerstäubers bei entsprechender Fliehkraft nach radial außen und bei nachlassender Fliehkraft nach radial innen zu gelangen, wodurch eine Rastverbindung gebildet und gelöst werden kann.

Insbesondere sind die Rastelemente 16' am freien Ende oder nahe dem freien Ende der Zungen 14' angeordnet und ragen nach radial außen vor. Die Rastelemente 16' sind vorgesehen, um im Betrieb des Rotationszerstäubers aufgrund der Fliehkraft mit einem jeweiligen komplementären Rastelement an der Innenkontur der Glockentellerwelle 9' eine Rastverbindung ausbilden zu können, die bei nachlassender bzw. nicht vorhandener Fliehkraft wieder gelöst wird.

Im Ruhezustand des Rotationszerstäubers bzw. bei nicht vorhandener Fliehkraft greifen die Zungen 14' bzw. die Rastelemente 16' des Abwurfsicherungselements ASE nicht in das komplementäre Rastelement an der Innenkontur der Glockentellerwelle 9' ein. Insbesondere erfolgt dabei keine Kontaktierung zwischen Abwurfsicherungselement ASE und Glockentellerwelle 9'.

Die Zungen 14' weisen im Bereich der freien Enden ferner nach radial innen und in Umfangsrichtung des Abwurfsicherungselements ASE angeordnete Vorsprünge auf, wodurch das Gewicht im Bereich der freien Enden der Zungen 14' erhöht werden kann, was sich vorteilhaft auf die Fliehkraftwirkung auswirkt.

Das komplementäre Rastelement an der Innenkontur der Glockentellerwelle 9' umfasst drei kreisbogenförmige Nuten 26, wobei in eine kreisbogenförmige Nut 26 im Betrieb des Rotationszerstäubers jeweils zwei Zungen 14' bzw. zwei Rast- oder Reibelemente 16' des Abwurfsicherungselements ASE gelangen, um eine Rastverbindung ausbilden zu können.

Die Zungen 14' stehen von einer Stirnseite eines die Zungen 14' verbindenden Basisteils 28, das als ein Ringteil ausgebildet ist, im Wesentlichen axial hervor. Die Zungen 14' sind über den Umfang des Basisteils 28 verteilt und durch die Zwischenräume 27 voneinander getrennt angeordnet.

Das Abwurfsicherungselement ASE umfasst ferner einen Vorsprung 29, der von dem Basisteil 28 im Wesentlichen axial hervorsteht und der an dem Basisteil 28 umläuft. Der Vorsprung 29 muss nicht umlaufend sein, sondern kann auch mehrere an dem Basisteil 28 verteilt und/oder durch Zwischenräume getrennt angeordnete Vorsprünge umfassen. Das Innengewinde 25 des Abwurfsicherungselements ASE ist an der Innenkontur des Vorsprungs 29 angeordnet. Die Zungen 14' und der Vorsprung 29 erstrecken sich von dem Basisteil 28 in entgegengesetzte Richtungen.

Eine weitere Besonderheit der in Figur 5 gezeigten Ausführungsform ist, dass das Abwurfsicherungselement ASE aus Kunststoff oder einem anderen Metall wie der Glockenteller 12'ausgebildet ist. Der Glockenteller 12' ist aus Titan ausgebildet.

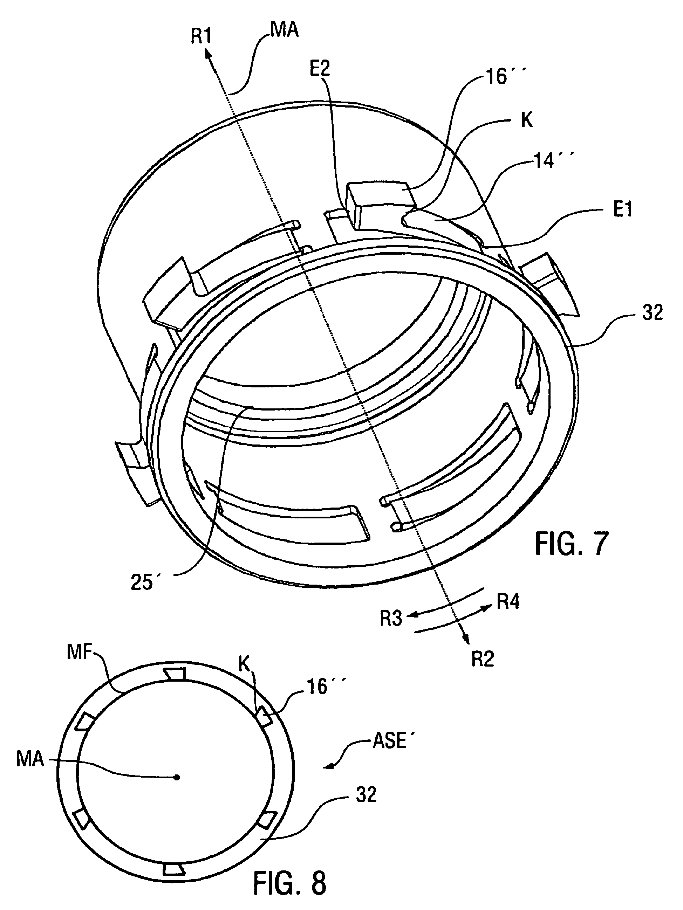

Figur 7 zeigt ein anderes Abwurfsicherungselement ASE' gemäß einem Ausführungsbeispiel der Erfindung. Das Abwurfsicherungselement gemäß Figur 7 kann an die Stelle des in Figur 5 gezeigten Abwurfsicherungselements ASE treten. Das Ausführungsbeispiel gemäß Figur 7 stimmt teilweise mit den vorstehend beschriebenen Ausführungsbeispielen, insbesondere dem Ausführungsbeispiel gemäß Figur 5, überein, wobei ähnliche oder identische Teile mit dem gleichen Bezugszeichen, jedoch zusätzlich mit einem Apostroph versehen sind, und zu deren Erläuterung auch auf die Beschreibung der vorstehend beschriebenen Ausführungsbeispiele verwiesen wird, um Wiederholungen zu vermeiden.

Figur 7 ist eine perspektivische Ansicht des Abwurfsicherungselements ASE' und Figur 8 ist eine Vorderansicht des Abwurfsicherungselements ASE'. Figur 7 zeigt das Abwurfsicherungselement ASE' unter Fliehkrafteinwirkung und Figur 8 zeigt das Abwurfsicherungselement ASE' ohne Fliehkrafteinwirkung. Bezugseichen MA kennzeichnet die Mittelachse, R1 bzw. R2 die Axialrichtung und R3 bzw. R4 die Umfangsrichtung des Abwurfsicherungselements ASE'.

Das Abwurfsicherungselement ASE' ist im Wesentlichen rohrförmig ausgebildet und umfasst eine kreisförmige Mantelfläche MF. Das Abwurfsicherungselement ASE' weist ein Festmachmittel in Form eines Innengewindes 25', das an dem zweiten Außengewinde 24 des Glockentellers 12' angeschraubt werden kann, und eine Befestigungseinrichtung auf.

Die Befestigungseinrichtung umfasst sechs Rast- oder Reibelemente (vorzugsweise drei) 16", die an sechs (vorzugsweise drei) elastischen Zungen 14" angeordnet sind. Die sechs Rast- oder Reibelemente 16" sind vorgesehen, um mit den komplementären Rast- oder Reibelementen 26 an der Innenkontur der drehbaren Glockentellerwelle 9' eine Rast- oder Reibverbindung zu bilden, die im Betrieb aufgrund der im Betrieb auftretenden Fliehkraft entsteht. Die Rast- oder Reibverbindung kann in Axialrichtung und/oder in Umfangsrichtung wirken.

Bei nicht vorhandener Fliehkraft ist die Rast- oder Reibverbindung gelöst, wobei insbesondere keine Kontaktierung zwischen den Rast- oder Reibelementen 26 an der Innenkontur der Glockentellerwelle 9' und den Rast- oder Reibelementen 16" des Abwurfsicherungselements ASE' vorliegt.

Jeweils ein Rast- oder Reibelement 16" ist am freien Ende oder zumindest nahe dem freien Ende einer Zunge 14" angeordnet und ragt nach radial außen vor. Die Rast- oder Reibelemente 16" weisen einen keilförmigen Abschnitt K auf, um einen entsprechenden keilförmigen Abschnitt am komplementären Rast- oder Reibelement 26 an der Innenkontur der drehbaren Glockentellerwelle 9 zu hintergreifen.

Die Zungen 14" erstrecken sich in Umfangsrichtung des Abwurfsicherungselements ASE' und sind kreisbogenförmig ausgebildet. Insbesondere sind die Zungen 14" und die Rast- oder Reibelemente 16" in einer zur Mittelachse MA des Abwurfsicherungselements ASE' senkrechten Ebene angeordnet. Jede Zunge 14" umfasst ein freies Ende E2 und ein gelagertes Ende E1, die ebenfalls in einer zur Mittelachse MA im Wesentlichen senkrechten Ebene angeordnet und in Umfangsrichtung voneinander beabstandet sind. Das gelagerte Ende E1 wird durch einen in Axialrichtung verlaufenden Abschnitt der kreisförmigen Mantelfläche MF des Abwurfsicherungselements ASE' ausgebildet.

Figur 7 zeigt die Zungen 14" bzw. die Rast- oder Reibelemente 16" wie sie im Betrieb aufgrund der im Betrieb auftretenden Fliehkräfte nach radial außen gelangen. Wie gesehen werden kann, sind insbesondere die Zungen 14" vorgesehen, um im Betrieb aufgrund der im Betrieb auftretenden Fliehkräfte im Wesentlichen spiralarmförmig und/oder im Wesentlichen kreisbogenförmig aus der kreisförmigen Mantelfläche MF des Abwurfsicherungselements ASE' nach außen bewegt zu werden und/oder hervorzustehen.

Wie in Figur 8 zu sehen, erstrecken sich die Zungen 14" bei nicht wirkender Fliehkraft in der kreisförmigen Mantelfläche MF des Abwurfsicherungselements ASE' bzw. sind
in der kreisförmigen Mantelfläche MF des Abwurfsicherungselements ASE' aufgenommen, während die Rast- oder Reibelemente 16" aus der kreisförmigen Mantelfläche MF des Abwurfsicherungselements ASE' radial nach außen hervorstehen.

Ein Vergleich der Figuren 7 und 8 verdeutlicht, dass die Zungen 14" vorgesehen sind, um im Betrieb aufgrund der im Betrieb auftretenden Fliehkraft aus der kreisförmigen Mantelfläche MF des Abwurfsicherungselements ASE' nach außen bewegt zu werden und bei nachlassender bzw. nicht vorhandener Fliehkraft in die kreisförmige Mantelfläche MF des Abwurfsicherungselements ASE' zurückzukehren.

Die Zungen 14" werden durch Schlitze in der kreisförmigen Mantelfläche MF des Abwurfsicherungselements ASE' ausgebildet, während sie durch die kreisförmige Mantelfläche MF des Abwurfsicherungselements ASE' voneinander getrennt sind, wie sich insbesondere aus Figur 7 ergibt.

Das Abwurfsicherungselement ASE' umfasst ferner an einem Endbereich oder nahe einem Endbereich einen umlaufenden nach radial außen vorragenden Bund 32, der als Anlage für abgebrochene Zungen 14" dient, um zu verhindern, dass diese zwischen Farbrohr und Glockentellerwelle 9' gelangen. Im Innern des Abwurfsicherungselements ASE' kann ein Ringkörper gemäß Figur 6, jedoch vorzugsweise ohne Stege 31, eingesetzt werden, um zu verhindern, dass abgebrochene Zungen 14" in Kontakt mit einem drehenden Teil (z.B. Sprühkörperwelle 9' oder Glockenteller 12') kommen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1: Glockentellerbefestigung
- 2: Glockentellerwelle
- 3: Spannhülse
- 4: Montageschaft des Glockentellers
- 5: Spannbohrung
- 6: Spannbohrung
- 7: Rotationszerstäuber
- 8: Glockenteller
- 9, 9': Glockentellerwelle der Lagereinheit
- 10, 10': Innengewinde
- 11: Montageschaft des Glockentellers
- 12, 12': Glockenteller
- 13, 13': Außengewinde
- 14, 14', 14": Rastzungen
- 15: Schlitze
- 16, 16', 16": Rastelement
- 17: Glockenteller
- 18: Glockentellerwelle
- 19: Stiftverbindung
- 20: Drehachse
- 21: Spannschraube
- 22: Schraubverbindung
- 23: Anschlag
- 24: Außengewinde
- 25, 25': Innengewinde
- 26: Nuten/Taschen
- 27: Zwischenräume
- 28: Basisteil
- 29: Vorsprung
- 30: Ringkörper
- 31: Stege
- 32: umlaufender Bund
- R1, R2: Axialrichtung(en)
- R3, R4: Umfangsrichtung(en)
- MA: Mittelachse
- K: keilförmiger Abschnitt
- ASE, ASE': Abwurfsicherungselement
- MF: Mantelfläche
- E1, E2: gelagertes Ende, freies Ende

## Patentansprüche

1. Sprühkörperwelle (2; 9; 9'; 18), insbesondere Glockentellerwelle, für einen Rotationszerstäuber, wobei ein Absprühkörper (8; 12; 12'; 17), insbesondere ein Glockenteller, an der drehbaren Sprühkörperwelle (2; 9; 9'; 18) montierbar ist, wobei
a) die Sprühkörperwelle (2; 9; 9'; 18) zusätzlich zu einer Verschraubung, um den Absprühkörper (8; 12; 12'; 17) an der Sprühkörperwelle (2; 9; 9'; 18) zu montieren, eine Befestigungseinrichtung (3; 10; 10'; 14, 15, 16; 19, 21; 26) aufweist, wobei
b) die Befestigungseinrichtung mindestens ein Rast- oder Reibelement an einer Innenkontur der Sprühkörperwelle aufweist, um mit mindestens einem komplementären Rast- oder Reibelement (16; 16'; 16"), das an einem Montageschaft des Absprühkörpers (12) oder an einem Abwurfsicherungselement (ASE; ASE') zur Abwurfsicherung des Absprühkörpers (12') angeordnet ist, eine Rast- oder Reibverbindung zu bilden, die im Betrieb aufgrund der im Betrieb auftretenden Fliehkräfte entsteht und/oder verstärkt wird, **dadurch gekennzeichnet, dass** das komplementäre Rast- oder Reibelement (16; 16'; 16") mindestens eine elastische Zunge (14; 14'; 14") umfasst, und dass das mindestens eine Rast- oder Reibelement an der Innenkontur der Sprühkörperwelle (9') zumindest zwei Taschen oder kreisbogenförmige Nuten (26) umfasst.

2. Sprühkörperwelle (2) nach Anspruch 1, **dadurch gekennzeichnet, dass** die Befestigungseinrichtung (3) eine Klemmeinrichtung aufweist, insbesondere eine Polygonklemmeinrichtung, um eine Klemmverbindung zwischen dem Absprühkörper und der Sprühkörperwelle (2) herzustellen.

3. Sprühkörperwelle (2; 9; 18) nach Anspruch 2,
**dadurch gekennzeichnet,**
a) **dass** die Sprühkörperwelle (2) eine hohle Innenkontur aufweist, in die ein Montageschaft (4) des Absprühkörpers axial eingeführt werden kann, um den Absprühkörper an der Sprühkörperwelle (2) zu montieren, und
b) **dass** die Innenkontur der Sprühkörperwelle (2) mittels der Klemmeinrichtung zwischen einer mechanisch unbelasteten Neutralstellung und einer mechanisch belasteten Montagestellung elastisch verformbar ist, und
c) **dass** die Innenkontur der Sprühkörperwelle (2) in dem mechanisch belasteten Montagezustand im Wesentlichen der Außenkontur des Montageschafts (4) entspricht, so dass der Montageschaft (4) des Absprühkörpers in die Innenkontur der Sprühkörperwelle (2) eingeführt werden kann, und
d) **dass** die Innenkontur der Sprühkörperwelle (2) in dem mechanisch unbelasteten Neutralzustand von der Außenkontur des Montageschafts (4) abweicht, so dass der Montageschaft (4) des Absprühkörpers nicht in die Innenkontur der Sprühkörperwelle (2) eingeführt werden kann, was im montierten Zustand des Absprühkörpers zu einer mechanischen Verspannung zwischen der Innenkontur der Sprühkörperwelle (2) und der Außenkontur des Montageschafts (4) führt.

4. Sprühkörperwelle (2) nach Anspruch 3,
**dadurch gekennzeichnet,**
a) **dass** die Klemmeinrichtung (3) mindestens eine Spannbohrung (5, 6) aufweist, in die eine Spannschraube eingeschraubt werden kann, wobei die Innenkontur der Sprühkörperwelle (2) beim Einschrauben der Spannschraube aus der Neutralstellung in die Montagestellung verformt wird, und/oder
b) **dass** die Spannbohrung (5, 6) in der Drehebene der Sprühkörperwelle (2) und/oder zu der Drehachse beabstandet verläuft.

5. Sprühkörperwelle (2) nach Anspruch 3 oder 4,
**dadurch gekennzeichnet,**
a) **dass** die Innenkontur der Sprühkörperwelle (2) in dem Neutralzustand polygonförmig und in dem Montagezustand im Wesentlichen zylindrisch ist, und/oder
b) **dass** die Außenkontur des Montageschafts (4) des Absprühkörpers im montierten Zustand linienförmig mit der Innenkontur der Sprühkörperwelle (2) verspannt ist.

6. Sprühkörperwelle (9) nach Anspruch 1,
**dadurch gekennzeichnet,**
a) **dass** die Sprühkörperwelle (9) zur Montage des Absprühkörpers (8) eine hohle Innenkontur mit einem Innengewinde (10) aufweist, und
b) **dass** sich das Innengewinde (10) der Sprühkörperwelle (9) über die Gewindelänge zu dem Absprühkörper (8) hin erweitert, insbesondere konisch, so dass die Befestigungseinrichtung eine konische Erweiterung des Innengewindes (10) umfasst.

7. Sprühkörperwelle (9) nach Anspruch 6,
**dadurch gekennzeichnet,**
a) **dass** das Innengewinde (10) einen über die Zahnspitzen gemessenen Nenndurchmesser aufweist, der über die Gewindelänge im Wesentlichen konstant ist, und
b) **dass** das Innengewinde (10) einen über die Zahntäler gemessenen Kerndurchmesser aufweist, der sich über die Gewindelänge zu dem Absprühkörper (8) hin erweitert.

8. Sprühkörperwelle (9) nach Anspruch 7,
**dadurch gekennzeichnet,**
a) **dass** die Zahnspitzen des Innengewindes (10) auf einer ersten Verbindungslinie liegen,
b) **dass** die Zahntäler des Innengewindes (10) auf einer zweiten Verbindungslinie liegen,
c) **dass** die erste Verbindungslinie und die zweite Verbindungslinie einen Winkel von mehr als 0,1°, 0,2°, 0,3°, 0,4° oder 0,5° einschließen, und/oder
d) **dass** die erste Verbindungslinie und die zweite Verbindungslinie einen Winkel von weniger als 6°, 5°, 4°, 3° oder 2° einschließen.

9. Sprühkörperwelle (9) nach Anspruch 7,
**dadurch gekennzeichnet, dass** sich der Nenndurchmesser und der Kerndurchmesser des Innengewindes (10) zu dem Absprühkörper (8) hin gleichermaßen erweitern.

10. Sprühkörperwelle (9) nach Anspruch 9,
**dadurch gekennzeichnet,**
a) **dass** sich das Innengewinde (10) mit dem Kerndurchmesser und dem Nenndurchmesser mit einem bestimmten Konuswinkel zu dem Absprühkörper (8) hin erweitert, und/oder
b) **dass** der Konuswinkel größer ist als 0,1°, 0,2°, 0,3°, 0,4° oder 0,5, und/oder
c) **dass** der Konuswinkel kleiner ist als 5°, 4°, 3° oder 2°.

11. Sprühkörperwelle nach Anspruch 1,
**dadurch gekennzeichnet,**
a) **dass** die Sprühkörperwelle eine hohle Innenkontur aufweist, in die ein Montageschaft des Absprühkörpers (12) axial eingeführt werden kann, um den Absprühkörper (12) an der Sprühkörperwelle zu montieren, und/oder
b) **dass** die Rast- oder Reibverbindung vorgesehen ist, um in axialer Richtung und/oder in Umfangsrichtung zu wirken, und/oder
c) **dass** das Rast- oder Reibelement (26) an der Innenkontur der Sprühkörperwelle (9') vorgesehen ist, um eine Rastanlage in Axialrichtung und/oder in Umfangsrichtung auszubilden, und/oder
d) **dass** das Rast- oder Reibelement an der Innenkontur der Sprühkörperwelle einen keilförmigen Abschnitt umfasst.

12. Sprühkörperwelle nach Anspruch 1 oder 11,
**dadurch gekennzeichnet,**
a) **dass** die Sprühkörperwelle ein Innengewinde aufweist, um mit einem entsprechend angepassten Außengewinde (13) an dem Montageschaft des Absprühkörpers (12) eine Schraubverbindung zu bilden, und
b) **dass** die Rast- oder Reibverbindung zwischen den komplementären Rast- oder Reibelementen des Absprühkörpers (12) oder des Abwurfsicherungselements (ASE) und der Sprühkörperwelle greift, wenn sich der Absprühkörper (12) und die Sprühkörperwelle in einer bestimmten axialen Rastposition relativ zueinander befinden, und
c) **dass** der Absprühkörper (12; 12') und die Sprühkörperwelle beim Herstellen der Schraubverbindung in axialer Richtung relativ zueinander in die Rastposition gezogen werden, ohne dass eine axiale Anpresskraft auf den Absprühkörper (12, 12') ausgeübt werden muss.

13. Sprühkörperwelle nach einem der Ansprüche 1, 11 oder 12,
**dadurch gekennzeichnet,**
a) **dass** das Rast- oder Reibelement (16; 16') des Abwurfsicherungselements (ASE) oder an dem Montageschaft des Absprühkörpers (12) im Betrieb aufgrund der Fliehkraft und/oder aufgrund seiner Eigenelastizität mit einer bestimmten radialen Anpresskraft nach außen gegen das komplementäre Rast- oder Reibelement an der Innenkontur der Sprühkörperwelle gedrückt wird, und
b) **dass** die Rast- oder Reibverbindung die radiale Anpresskraft in eine axiale Anzugskraft umwandelt, um den Absprühkörper (12) oder das Abwurfsicherungselement (ASE) axial mit der Sprühkörperwelle zu verspannen.

14. Sprühkörperwelle (18) nach Anspruch 1,
**dadurch gekennzeichnet,**
a) **dass** die Sprühkörperwelle (18) eine hohle Innenkontur mit einem Innengewinde (22) aufweist, in das eine zentrale Spannschraube (21) mit einem Außengewinde eingeschraubt werden kann, um den Absprühkörper (17) an der Sprühkörperwelle (18) zu montieren, und
b) **dass** die Befestigungseinrichtung eine Verdrehsicherung (19) aufweist, die an der Sprühkörperwelle (18) angeordnet ist und den Absprühkörper (17) im montierten Zustand verdrehsicher mit der Sprühkörperwelle (18) verbindet, und/oder
c) **dass** die Innenkontur der Sprühkörperwelle (18) einen radial nach innen hervor stehenden Absatz aufweist, an dessen Innenseite sich das Innengewinde (22) für die zentrale Spannschraube (17) befindet, und/oder
d) **dass** das Innengewinde (22) für die zentrale Spannschraube (17) einen wesentlich kleiner Durchmesser aufweist als die Sprühkörperwelle (2; 9; 18).

15. Sprühkörperwelle (18) nach Anspruch 14,
**dadurch gekennzeichnet,**
a) **dass** die Verdrehsicherung (19) einen stirnseitig angeordneten und axial verlaufenden Stift aufweist, der im montierten Zustand in eine entsprechend angepasste axial verlaufende Aufnahmebohrung in dem Absprühkörper (17) eingreift, oder
b) **dass** die Verdrehsicherung (19) eine stirnseitig angeordnete und axial verlaufende Aufnahmebohrung aufweist, in die im montierten Zustand ein entsprechend angepasster axial verlaufender Stift an dem Absprühkörper (17) eingreift.

16. Absprühkörper (8; 12; 12'; 17), insbesondere Glockenteller, für einen Rotationszerstäuber, wobei der Absprühkörper (8; 12; 12'; 17) an einer drehbaren Sprühkörperwelle (2; 9; 9'; 18), insbesondere an einer Glockentellerwelle, des Rotationszerstäubers montierbar ist,
a) wobei der Absprühkörper (8; 12; 12'; 17) zusätzlich zu einer Verschraubung, um den Absprühkörper (8; 12; 12'; 17) an der Sprühkörperwelle (2; 9; 9'; 18) zu montieren, oder anstelle der Verschraubung eine Befestigungseinrichtung aufweist,
wobei
b) die Befestigungseinrichtung mindestens ein Rast- oder Reibelement (16; 16'; 16") aufweist, um mit mindestens einem komplementären Rast- oder Reibelement an einer Innenkontur der Sprühkörperwelle eine Rast- oder Reibverbindung zu bilden, die im Betrieb aufgrund der im Betrieb auftretenden Fliehkräfte entsteht und/oder verstärkt wird, **dadurch gekennzeichnet, dass** das Rast- oder Reibelement (16; 16'; 16") mindestens eine elastische Zunge (14; 14'; 14'') umfasst, die sich im Wesentlichen kreisbogenförmig erstreckt.

17. Absprühkörper (12'), insbesondere Glockenteller, für einen Rotationszerstäuber, wobei der Absprühkörper (12') an einer drehbaren Sprühkörperwelle (9'), insbesondere an einer Glockentellerwelle, des Rotationszerstäubers montierbar ist, wobei
a) der Absprühkörper (12') zusätzlich zu einer ersten Festmachstruktur (13'), um den Absprühkörper (12') an der Sprühkörperwelle (9') zu montieren,
b) eine zweite Festmachstruktur (24) aufweist, um ein eine Befestigungseinrichtung umfassendes Abwurfsicherungselement (ASE; ASE') zur Abwurfsicherung des Absprühkörpers (12') zu montieren, und/oder an der zweiten Festmachstruktur (24) ein eine Befestigungseinrichtung umfassendes Abwurfsicherungselement (ASE; ASE') zur Abwurfsicherung des Absprühkörpers (12') vorgesehen ist,
**dadurch gekennzeichnet, dass**
c) die erste Festmachstruktur (13') ein erstes Gewinde ist und die zweite Festmachstruktur (24) ein zweites Gewinde ist, und
d) die Befestigungseinrichtung mindestens ein Rast- oder Reibelement (16; 16'; 16") aufweist, um mit mindestens einem komplementären Rast- oder Reibelement an einer Innenkontur der Sprühkörperwelle eine Rast- oder Reibverbindung zu bilden, die im Betrieb aufgrund der im Betrieb auftretenden Fliehkräfte entsteht und/oder verstärkt wird, wobei das Rast- oder Reibelement (16; 16'; 16") mindestens eine elastische Zunge (14; 14'; 14") umfasst, die sich im Wesentlichen kreisbogenförmig erstreckt.

18. Absprühkörper nach Anspruch 16,
**dadurch gekennzeichnet,**
a) **dass** der Absprühkörper einen Montageschaft (4) aufweist, der im montierten Zustand in eine hohle Innenkontur der Sprühkörperwelle (2) eingeführt und durch eine Klemmeinrichtung (3, 5, 6) mit der Sprühkörperwelle (2) verbunden ist, und/oder
b) **dass** der Montageschaft (4) einen zylindrischen Außenquerschnitt aufweist, und/oder
c) **dass** der Montageschaft (4) eine gewindefreie Außenkontur aufweist.

19. Absprühkörper (8; 12') nach Anspruch 16 oder 17,
**dadurch gekennzeichnet,**
a) **dass** der Absprühkörper (8; 12') einen Montageschaft (11) aufweist, der im montierten Zustand in eine hohle Innenkontur der Sprühkörperwelle (9; 9') eingeführt ist, und/oder
b) **dass** der Montageschaft (11) ein Außengewinde aufweist, das im montierten Zustand mit einem Innengewinde (10; 10') der Sprühkörperwelle (9; 9') verschraubt ist, und/oder
c) **dass** der Montageschaft (11) mehrere axial verlaufende Schlitze aufweist, die von der Stirnseite des Montageschafts (11) ausgehen und den Montageschaft (11) an seinem distalen Ende in mehrere Schaftsektoren unterteilen, und/oder
d) die Schaftsektoren radial nachgiebig sind, um sich an das konische Innengewinde (10) der Sprühkörperwelle (9) anzupassen.

20. Absprühkörper (8; 12') nach Anspruch 19, **dadurch gekennzeichnet,**
a) **dass** die Schlitze zwischen den benachbarten Schaftsektoren mit einem elastischen und/oder schwingungsdämpfenden Material gefüllt sind, und/oder
b) **dass** auf der Innenseite der Schlitze ein die Schlitze abdichtender Ringkörper (30) eingesetzt ist, und/oder
c) **dass** dem Ringkörper (30) in die Schlitze eingreifbare Stege (31) angeformt sind.

21. Absprühkörper (12; 12') nach einem der Ansprüche 16 bis 20,
**dadurch gekennzeichnet,**
a) **dass** der Absprühkörper (12; 12') einen Montageschaft aufweist, der im montierten Zustand in eine hohle Innenkontur der Sprühkörperwelle eingeführt ist, und/oder
b) **dass** der Montageschaft die erste Festmachstruktur (13') und die zweite Festmachstruktur (24) aufweist, und/oder
c) **dass** das erste Gewinde (13') und das zweite Gewinde (24) koaxial zueinander angeordnet sind, und/oder
d) **dass** das erste Gewinde (13') ein Außengewinde ist, um mit einem entsprechend angepassten Innengewinde (10') an der hohlen Innenkontur der Sprühkörperwelle (9') eine Schraubverbindung zu bilden, und das zweite Gewinde (24) ein Außengewinde ist, um mit einem entsprechend angepassten Innengewinde (25; 25') an dem Abwurfsicherungselement (ASE; ASE') eine Schraubverbindung zu bilden.

22. Absprühkörper (12; 12') nach einem der Ansprüche 16 bis 21, **dadurch gekennzeichnet, dass** das Rast- oder Reibelement (16; 16'; 16") an dem Montageschaft des Absprühkörpers (12) oder an dem Abwurfsicherungselement (ASE; ASE') vorgesehen ist.

23. Absprühkörper (12) nach einem der Ansprüche 16 bis 22, **dadurch gekennzeichnet,**
a) **dass** der Montageschaft ein Außengewinde (13; 13') aufweist, um mit einem entsprechend angepassten Innengewinde an der hohlen Innenkontur der Sprühkörperwelle eine Schraubverbindung zu bilden, und/oder
b) **dass** die Rast- oder Reibverbindung zwischen den komplementären Rast- oder Reibelementen des Abwurfsicherungselements (ASE) oder des Absprühkörpers (12; 12' und der Sprühkörperwelle greift, wenn sich der Absprühkörper (12; 12') oder das Abwurfsicherungselement (ASE) und die Sprühkörperwelle in einer bestimmten axialen Position relativ zueinander befinden, und/oder
c) **dass** der Absprühkörper (12; 12') oder das Abwurfsicherungselement (ASE) und die Sprühkörperwelle beim Herstellen der Schraubverbindung in axialer Richtung relativ zueinander in die Rastposition gezogen werden, ohne dass eine axiale Anpresskraft auf den Absprühkörper (12) oder das Abwurfsicherungselement (ASE) ausgeübt werden muss.

24. Absprühkörper (12) nach einem der Ansprüche 16 bis 23, **dadurch gekennzeichnet,**
a) **dass** das Rast- oder Reibelement des Abwurfsicherungselements oder an dem Montageschaft des Absprühkörpers (12) im Betrieb aufgrund der Fliehkraft und/oder aufgrund seiner Eigenelastizität mit einer bestimmten radialen Anpresskraft nach außen gegen das komplementäre Rast- oder Reibelement an der Innenkontur der Sprühkörperwelle gedrückt wird, und
b) **dass** die Rast- oder Reibverbindung die radiale Anpresskraft in eine axiale Anzugskraft umwandelt, um den Absprühkörper (12) oder das Abwurfsicherungselement axial mit der Sprühkörperwelle zu verspannen.

25. Absprühkörper (12) nach einem der Ansprüche 16 bis 24, **dadurch gekennzeichnet,**
a) **dass** das Rast- oder Reibelement (16; 16'; 16") mindestens eine elastisch federnde Zunge (14; 14'; 14") ist, und/oder
b) **dass** die Rast- oder Reibelemente elastische Zungen (14; 14'; 14") und/oder elastisch federnde Zungen (14; 14'; 14") sind, und/oder
c) **dass** die Zungen (14; 14'; 14") im Betrieb aufgrund der im Betrieb auftretenden Fliehkräfte radial nach außen gedrückt werden, und/oder
d) **dass** das zumindest eine Rast- oder Reibelement (16; 16'; 16") am freien Ende oder zumindest nahe dem freien Ende zumindest einer Zunge vorgesehen ist und/oder nach außen vorragt, und/oder
e) **dass** die Rast- oder Reibelemente (16; 16'; 16") vorgesehen sind, um im Betrieb aufgrund der im Betrieb auftretenden Fliehkräfte radial nach außen in zumindest zwei kreisbogenförmige Nuten oder Taschen (26) an der Innenkontur der Sprühkörperwelle (9') bewegt zu werden, und/oder
f) **dass** die Rast- oder Reibverbindung vorgesehen ist, um bei nicht vorhandener Fliehkraft gelöst zu sein, und/oder
g) **dass** bei nicht vorhandener Fliehkraft sich das Rast- oder Reibelement an der Innenkontur der Sprühkörperwelle und das Rast- oder Reibelement (16; 16'; 16") des Abwurfsicherungselements (ASE; ASE') oder des Absprühkörpers (12; 12') nicht kontaktieren, und/oder
h) **dass** die Rast- oder Reibverbindung vorgesehen ist, um in Axialrichtung und/oder in Umfangsrichtung zu wirken, und/oder
i) **dass** die zumindest eine Zunge (14; 14'; 14") und/oder das zumindest eine Rast- oder Reibelement (16; 16'; 16") gemäß kennzeichnendem Teil einer der Ansprüche 32 bis 35 ausgebildet ist.

26. Absprühkörper (12; 12') nach einem der Ansprüche 16 bis 25, **dadurch gekennzeichnet,**
a) **dass** das Abwurfsicherungselement (ASE; ASE') und/oder die Zungen (14; 14'; 14") aus Kunststoff oder Metall ausgebildet sind, und/oder
b) **dass** zumindest ein Teil des verbleibenden Absprühkörpers (12; 12') oder der im Wesentlichen gesamte verbleibende Teil des Absprühkörpers (12; 12') aus Metall ausgebildet ist, und/oder
c) **dass** das Abwurfsicherungselement (ASE; ASE') gemäß einem der Ansprüche 31 bis 36 ausgebildet ist.

27. Absprühkörper (17) nach Anspruch 16,
**dadurch gekennzeichnet,**
a) **dass** die Befestigungseinrichtung eine zentrale Spannschraube (21) aufweist, die in dem Absprühkörper (17) bezüglich der Drehachse des Glockentellers koaxial angeordnet ist, und
b) **dass** die zentrale Spannschraube (21) ein Außengewinde aufweist, um mit einem entsprechend angepassten Innengewinde an der hohlen Innenkontur der Sprühkörperwelle (18) eine Schraubverbindung (22) zu bilden, und
c) **dass** der Absprühkörper (17) zur Durchführung der Spannschraube (21) eine axial durchgehende Bohrung aufweist, und
d) **dass** der Absprühkörper (17) einen axialen Anschlag (23) für die Spannschraube (21) aufweist, um den Absprühkörper (17) mittels der Spannschraube (21) axial mit der Sprühkörperwelle (18) zu verspannen.

28. Absprühkörper (17) nach Anspruch 27, **dadurch gekennzeichnet, dass** der Absprühkörper (17) eine Verdrehsicherung (19) aufweist, die den Absprühkörper (17) im montierten Zustand verdrehsicher mit der Sprühkörperwelle (18) verbindet.

29. Absprühkörper (17) nach Anspruch 28,
**dadurch gekennzeichnet,**
a) **dass** die Verdrehsicherung (19) eine stirnseitig angeordnete und axial verlaufende Aufnahmebohrung in dem Absprühkörper (17) aufweist, in die im montierten Zustand ein entsprechend angepasster axial verlaufender Stift an der Stirnseite der Sprühkörperwelle (18) eingreift, oder
b) **dass** die Verdrehsicherung (19) einen stirnseitig angeordneten und axial verlaufenden Stift aufweist, der im montierten Zustand in eine entsprechend angepasste axial verlaufende Aufnahmebohrung in der Stirnseite der Sprühkörperwelle (18) eingreift.

30. Absprühkörper (17) nach einem der Ansprüche 16 bis 29, **dadurch gekennzeichnet,**
a) **dass** die Spannschraube hohl ist, und/oder
b) **dass** der Absprühkörper (17) eine Verteilerscheibe aufweist, um das zu applizierende Beschichtungsmittel zu verteilen, wobei die Verteilerscheibe an der Spannschraube (21) befestigt ist.

31. Abwurfsicherungselement (ASE; ASE') zur Abwurfsicherung eines Absprühkörpers (12') für einen Rotationszerstäuber, vorzugsweise einem Absprühkörper (12') nach einem der Ansprüche 16 bis 30, **dadurch gekennzeichnet,**
a) **dass** das Abwurfsicherungselement (ASE; ASE') zusätzlich zu einem Festmachmittel (25; 25'), um das Abwurfsicherungselement (ASE; ASE') an dem Absprühkörper (12') zu montieren, eine Befestigungseinrichtung aufweist,
b) **dass** die Befestigungseinrichtung mindestens ein Rast- oder Reibelement (16'; 16") umfasst, das vorgesehen ist, um mit mindestens einem komplementären Rast- oder Reibelement an einer Innenkontur einer drehbaren Sprühkörperwelle (9'), insbesondere einer Glockentellerwelle des Rotationszerstäubers, an der der Absprühkörper (12') montierbar ist, eine Rast- oder Reibverbindung zu bilden, die im Betrieb aufgrund der im Betrieb auftretenden Fliehkraft entsteht und/oder verstärkt wird, und
c) **dass** das mindestens eine Rast- oder Reibelement (16'; 16") an mindestens einer elastischen Zunge (14'; 14") angeordnet ist, die sich im Wesentlichen kreisbogenförmig erstreckt.

32. Abwurfsicherungselement nach Anspruch 31, **dadurch gekennzeichnet,**
a) **dass** mindestens ein Rast- oder Reibelement (16'; 16") an mehreren elastischen Zungen (14'; 14") angeordnet ist, und/oder
b) **dass** die mindestens eine elastische Zunge (14'; 14") eine elastisch federnde Zunge (14'; 14") ist, und/oder
c) die mindestens eine Zunge (14") ein gelagertes Ende (E1) und ein freies Ende (E2) umfasst, die in Umfangsrichtung des Abwurfsicherungselements (ASE') voneinander beabstandet sind, und/oder
d) **dass** die Zungen (14') über den Umfang des Basisteils (28) verteilt angeordnet und durch Zwischenräume (27) voneinander getrennt sind, und/oder
e) **dass** die mindestens eine Zunge (14'; 14'') im Betrieb aufgrund der im Betrieb auftretenden Fliehkräfte nach radial außen gelangt, und/oder
f) **dass** die Rast- oder Reibverbindung bei nicht vorhandener Fliehkraft gelöst ist und/oder dass bei nicht vorhandener Fliehkraft sich das Rast- oder Reibelement (26) an der Innenkontur der Sprühkörperwelle (9') und das Rast- oder Reibelement (16'; 16") des Abwurfsicherungselements (ASE; ASE') nicht kontaktieren, und/oder
g) **dass** die Rast- oder Reibverbindung vorgesehen ist, um in Axialrichtung und/oder in Umfangsrichtung zu wirken, und/oder
h) **dass** die Rast- oder Reibelemente (16; 16'; 16") vorgesehen sind, um im Betrieb aufgrund der im Betrieb auftretenden Fliehkräfte radial nach außen in zumindest zwei kreisbogenförmige Nuten oder Taschen (26) an der Innenkontur der Sprühkörperwelle (9') bewegt zu werden.

33. Abwurfsicherungselement nach einem der Ansprüche 31 oder 32, **dadurch gekennzeichnet**
a) **dass** das Basisteil (28) ein Ringteil ist, und/oder
b) **dass** das Basisteil (28) die Zungen (14') miteinander verbindet, und/oder
c) **dass** das Abwurfsicherungselement (ASE) zumindest einen Vorsprung (29) umfasst, der von dem Basisteil (28) im Wesentlichen axial hervorsteht und an dem das Festmachmittel (25) vorgesehen ist, und/oder
d) **dass** sich die mindestens eine Zunge (14') und der zumindest eine Vorsprung (29) von dem Basisteil (28) in entgegengesetzte Richtungen erstrecken, und/oder
e) **dass** das Festmachmittel (25. 25') ein Gewinde, insbesondere ein Außengewinde ist, und/oder
f) **dass** die mindestens eine Zunge (14') an ihrem freien Ende oder zumindest nahe ihrem freien Ende einen nach radial innen und/oder in Umfangsrichtung angeordneten Vorsprung aufweist, um das Gewicht zu erhöhen, und/oder
g) **dass** das zumindest eine Rast- oder Reibelement (16; 16'; 16") am freien Ende oder zumindest nahe dem freien Ende zumindest einer Zunge (14'; 14") angeordnet ist und/oder nach außen vorragt, und/oder
h) **dass** das Rast- oder Reibelement (16") einen keilförmigen Abschnitt aufweist, und/oder
i) **dass** das Rast- oder Reibelement (16") und/oder die zumindest eine Zunge (14") an ihrem freien Ende (E2) oder zumindest nahe ihrem freien Ende (E2) nach außen über eine kreisförmige Mantelfläche (MF) des Abwurfsicherungselements (ASE) hervorsteht.

34. Abwurfsicherungselement nach einem der Ansprüche 31 bis 33, **dadurch gekennzeichnet, dass** zumindest eine Zunge (14")
a) sich im Wesentlichen in Umfangsrichtung des Abwurfsicherungselements (ASE') und/oder kreisbogenförmig erstreckt, und/oder
b) sich in einer zur Mittelachse (MA) des Abwurfsicherungselements (ASE') im Wesentlichen senkrechten Ebene erstreckt, und/oder
c) vorgesehen ist, um sich zumindest abschnittsweise in einer kreisförmigen Mantelfläche (MF) des Abwurfsicherungselements (ASE') zu erstrecken, und/oder
d) vorgesehen ist, um in einer kreisförmigen Mantelfläche (MF) des Abwurfsicherungselements (ASE') aufgenommen und/oder gelagert zu werden, und/oder
e) durch Schlitze in der kreisförmigen Mantelfläche (MF) des Abwurfsicherungselements (ASE') ausgebildet wird, und/oder
f) ein freies Ende (E2) und ein gelagertes Ende (E1) in einer zur Mittelachse (MA) des Abwurfsicherungselements (ASE') im Wesentlichen senkrechten Ebene umfasst, und/oder
g) vorgesehen ist, um im Betrieb aufgrund der im Betrieb auftretenden Fliehkräfte im Wesentlichen spiralarmförmig und/oder im Wesentlichen kreisbogenförmig aus der Mantelfläche (MF) des Abwurfsicherungselements (ASE') nach außen bewegt zu werden und/oder hervorzustehen.

35. Abwurfsicherungselement nach einem der Ansprüche 31 bis 34, **dadurch gekennzeichnet,**
a) **dass** die Zungen (14") durch eine kreisförmige Mantelfläche (MF) des Abwurfsicherungselements (ASE') voneinander getrennt sind, und/oder
b) **dass** das Abwurfsicherungselement (ASE') im Wesentlichen rohrförmig ausgebildet ist und/oder eine im Wesentlichen kreisförmige Mantelfläche (MF) umfasst, und/oder
c) **dass** das Abwurfsicherungselement (ASE') an einem Endbereich oder zumindest nahe einem Endbereich einen nach außen vorragenden Bund (32) umfasst, und/oder
d) **dass** das Abwurfsicherungselement (ASE; ASE') einen Ringkörper (30) umfasst, der vorgesehen ist, um an der Innenseite des Abwurfsicherungselements (ASE; ASE') angeordnet zu werden.

36. Abwurfsicherungselement nach einem der Ansprüche 31 bis 35, **dadurch gekennzeichnet,**
a) **dass** das Abwurfsicherungselement (ASE; ASE'), und/oder
b) **dass** die zumindest eine Zunge (14; 14'; 14") und/oder das zumindest eine Rast- oder Reibelement (16; 16'; 16")
aus Kunststoff oder Metall ausgebildet ist.

37. Rotationszerstäuber mit
a) einer Sprühkörperwelle (2; 9; 9'; 18) nach einem der Ansprüche 1 bis 15, und/oder
b) einem an der Sprühkörperwelle (2; 9; 9'; 18) montierten Absprühkörper (8; 12; 12'; 17) nach einem der Ansprüche 16 bis 30, und/oder
c) einem Abwurfsicherungselement (ASE; ASE') nach einem der Ansprüche 31 bis 36.

38. Lackieranlage mit mindestens einem Rotationszerstäuber nach Anspruch 37.

## Claims

1. A spray body shaft (2; 9; 9'; 18), particularly a bell cup shaft, for a rotary atomiser, wherein a spray body (8; 12; 12'; 17), particularly a bell cup, is mountable on the rotatable spray body shaft (2; 9; 9'; 18), wherein
a) the spray body shaft (2; 9; 9'; 18) comprises, in addition to a screw connection to mount the spray body (8; 12; 12'; 17) on the spray body shaft (2; 9; 9'; 18), a fastening device (3; 10; 10'; 14, 15, 16; 19, 21; 26), wherein
b) the fastening device comprises at least one locking or friction element on an inner contour of the spray body shaft to form a locking or friction connection with at least one complementary locking or friction element (16; 16'; 16") that is arranged on the mounting shaft of the spray body (12) or on a throw-off securing element (ASE; ASE') for throw-off securement of the spray body (12'), the locking or friction connection being created and/or strengthened in operation due to the centrifugal forces occurring during operation, **characterized in that** the complementary locking or friction element (16; 16'; 16") comprises at least one elastic tongue (14; 14'; 14"), and that the at least one locking or friction element on the inner contour of the spray body shaft (9') comprises at least two pockets or circular arc-shaped grooves (26).

2. The spray body shaft (2) in accordance with claim 1, **characterized in that** the fastening device (3) comprises a clamping device, particularly a polygonal clamping device, to create a clamp connection between the spray body and the spray body shaft (2).

3. The spray body shaft (2; 9; 18) in accordance with claim 2,
**characterized in**
a) **that** the spray body shaft (2) has a hollow inner contour into which a mounting shaft (4) of the spray body can be axially inserted to mount the spray body on the spray body shaft (2), and
b) **that** the inner contour of the spray body shaft (2) is elastically deformable between a mechanically unstressed neutral position and a mechanically stressed mounting position by the clamping device, and
c) **that** the inner contour of the spray body shaft (2) in the mechanically stressed mounting state substantially corresponds to the outer contour of the mounting shaft (4) so that the mounting shaft (4) of the spray body can be inserted into the inner contour of the spray body shaft (2), and
d) **that** the inner contour of the spray body shaft (2) in the mechanically unstressed neutral state is different from the outer contour of the mounting shaft (4) so that the mounting shaft (4) of the spray body cannot be inserted into inner contour of the spray body shaft (2), which in the mounted state of the spray body leads to mechanical clamping between the inner contour or the spray body shaft (2) and the outer contour of the mounting shaft (4).

4. The spray body shaft (2) in accordance with claim 3,
**characterized in**
a) **that** the clamping device (3) has at least one clamping bore (5, 6) into which a clamping screw can be screwed, wherein during screwing in of the clamping screw the inner contour of the spray body shaft (2) is deformed from the neutral position into the mounting position, and/or
b) **that** the clamping bore (5, 6) extends in the rotational plane of the spray body shaft (2) and/or at a distance from the axis of rotation.

5. The spray body shaft (2) in accordance with claim 3 or 4,
**characterized in**
a) **that** the inner contour of the spray body shaft (2) is polygonal in the neutral state and substantially cylindrical in the mounting state, and/or
b) **that** the outer contour of the mounting shaft (4) of the spray body is linearly clamped to the inner contour of the spray body shaft (2) in the mounted state.

6. The spray body shaft (9) in accordance with claim 1,
**characterized in**
a) **that** for the mounting of the spray body (8) the spray body shaft (9) has a hollow inner contour with an internal thread (10), and
b) **that** the internal thread (10) of the spray body shaft (9) widens, particularly conically, over the length of the thread towards the spray body (8) so that the fastening device comprises a conical widening of the internal thread (10).

7. The spray body shaft (9) in accordance with claim 6,
**characterized in**
a) **that** the internal thread (10) has a nominal diameter measured over the tooth tips which is substantially constant over the length of the thread, and
b) **that** the internal thread (10) has a core diameter measured over the tooth valleys which widens over the length of the thread towards the spray body (8).

8. The spray body shaft (9) in accordance with claim 7,
**characterized in**
a) **that** the tooth tips of the internal thread (10) lie on a first connection line,
b) **that** the tooth valleys of the internal thread (10) lie on a second connection line,
c) **that** the first connection line and the second connection line encompass an angle of more than 0.1°, 0.2°, 0.3°, 0.4° or 0.5°, and/or
d) **that** the first connection line and the second connection line encompass an angle of less than 6°, 5°, 4°, 3° or 2°.

9. The spray body shaft (9) in accordance with claim 7,
**characterized in that** the nominal diameter and the core diameter of the internal thread (10) widen equally towards the spray body (8).

10. The spray body shaft (9) in accordance with claim 9,
**characterized in**
a) **that** the internal thread (10) with the core diameter and the nominal diameter widens at a certain cone angle towards the spray body (8), and/or
b) **that** the cone angle is greater than 0.1°, 0.2°, 0.3°, 0.4° or 0.5, and/or
c) **that** the cone angle is less than 5°, 4°, 3° or 2°.

11. The spray body shaft in accordance with claim 1,
**characterized in**
a) **that** the spray body shaft has a hollow inner contour into which a mounting shaft of the spray body (12) can be axially inserted to mount the spray body (12) on the spray body shaft, and/or
b) **that** the locking or friction connection is provided to act in the axial direction and/or in the circumferential direction, and/or
c) **that** the locking or friction element (26) on the inner contour of the spray body shaft (9') is provided for forming a locking stop in the axial direction and/or in the circumferential direction, and/or
d) **that** the locking or friction element on the inner contour of the spray body shaft comprises a wedge-shaped section.

12. The spray body shaft in accordance with claim 1 or 11,
**characterized in**
a) **that** the spray body shaft has an internal thread to form a screw connection with a correspondingly adapted external thread (13) on the mounting shaft of the spray body (12), and
b) **that** the locking or friction connection between the complementary locking or friction elements or the spray body (12) or of the throw-off securing element (ASE) and of the spray body shaft engages when the spray body (12) and the spray body shaft are in a certain axial locking position relative to each other, and
c) **that** the spray body (12; 12') and the spray body shaft are, during creation of the screw connection, pulled axially relative to each other into the locking position, without an axial pressing on force having to be exerted on the spray body (12, 12').

13. The spray body shaft in accordance with any one of claims 1, 11 or 12,
**characterized in**
a) **that** the locking or friction element (16; 16') of the throw-off securing element (ASE) or on the mounting shaft of the spray body (12) is, in operation due to the centrifugal force and/or its own elasticity, pressed outwards with a certain radial pressing on force against the complementary locking or friction element on the inner contour of the spray body shaft, and
b) **that** the locking or friction connection converts the radial pressing on force into an axial attraction force to clamp the spray body (12) or the throw-off securing element (ASE) axially to the spray body shaft.

14. The spray body shaft (18) in accordance with claim 1,
**characterized in**
a) **that** the spray body shaft (18) has a hollow inner contour with an internal thread (22) into which a central clamping screw (21) with an external thread can be screwed to mount the spray body (17) on the spray body shaft (18), and
b) **that** the fastening device comprises a rotation securement (19) which is arranged on the spray body shaft (18) and connects the spray body (17) in the mounted state to the spray body shaft (18) in a manner secured against rotation, and/or
c) **that** the inner contour of the spray body shaft (18) has a radially inward projecting projection on the inside of which is the internal thread (22) for the central clamping screw (17), and/or
d) **that** the internal thread (22) for the central clamping screw (17) has a substantially smaller diameter than the spray body shaft (2; 9; 18).

15. The spray body shaft (18) in accordance with claim 14,
**characterized in**
a) **that** the rotation securement (19) has a pin arranged on the front side and extending axially, wherein in the mounted state the pin engages in a correspondingly adapted axially extending receiving bore in the spray body (17), or
b) **that** the rotation securement (19) has a receiving bore arranged on the front side and extending axially, wherein in the mounted state a correspondingly adapted axially extending pin on the spray body (17) engages into the receiving bore.

16. A spray body (8; 12; 12'; 17), particularly bell cup, for a rotary atomiser, wherein the spray body (8; 12; 12'; 17) is mountable on a rotatable spray body shaft (2; 9; 9'; 18), particularly on a bell cup shaft, of the rotary atomiser wherein
a) the spray body (8; 12; 12'; 17) comprises, in addition to a screw connection to mount the spray body (6, 12, 12'; 17) on the spray body shaft (2; 9; 9'; 18)or instead of the screw connection, a fastening device,
wherein
b) the fastening device comprises at least one locking or friction element (16; 16'; 16") to form a locking or friction connection with at least one complementary locking or friction element on an inner contour of the spray body shaft, wherein the locking or friction connection is created and/or strengthened in operation due to the centrifugal forces occurring during operation, **characterized in that** the locking or friction element (16; 16'; 16") comprises at least one elastic tongue (14; 14'; 14") which extends substantially circular arc-shaped.

17. A spray body (12'), particularly bell cup, for a rotary atomiser, wherein the spray body (12') is mountable on a rotatable spray body shaft (9'), particularly a bell cup shaft, of the rotary atomiser, wherein
a) the spray body (12') comprises, in addition to a first attaching structure (13') to mount the spray body (12') on the spray body shaft (9'),
b) a second attaching structure (24) to mount a throw-off securing element (ASE; ASE') for throw-off securement of the spray body (12'), the throw-off securing element (ASE; ASE') comprising a fastening device, and/or a throw-off securing element (ASE; ASE') for throw-off securement of the spray body (12') is provided on the second attaching structure (24), the throw-off securing element (ASE; ASE') comprising a fastening device,
**characterized in that**
c) the first attaching structure (13') is a first thread and the second attaching structure (24) is a second thread, and
d) the fastening device comprises at least one locking or friction element (16; 16'; 16") to form a locking or friction connection with at least one complementary locking or friction element on an inner contour of the spray body shaft, wherein the locking or friction connection is created and/or strengthened in operation due to the centrifugal forces occurring during operation, wherein the locking or friction element (16; 16'; 16") comprises at least one elastic tongue (14; 14'; 14") which extends substantially circular arc-shaped.

18. The spray body in accordance with claim 16,
**characterized in**
a) **that** the spray body has a mounting shaft (4), which in the mounted state is inserted into a hollow inner contour of the spray body shaft (2) and is connected by means of a clamping device (3, 5, 6) to the spray body shaft (2), and/or
b) **that** the mounting shaft (4) has a cylindrical outer cross-section and/or
c) **that** the mounting shaft (4) has a threadless outer contour.

19. The spray body (8; 12') in accordance with claim 16 or 17,
**characterized in**
a) **that** the spray body (8; 12'has a mounting shaft (11), which in the mounted state is inserted into a hollow inner contour of the spray body shaft (9; 9'), and/or
b) **that** the mounting shaft (11) has an external thread, which in the mounted state is screwed onto an internal thread (10; 10') of the spray body shaft (9; 9') and/or
c) **that** the mounting shaft (11) has several axially extending slits starting from the front side of the mounting shaft (11) and dividing the mounting shaft (11) at its distal end into several shaft sectors, and/or
d) **that** the shaft sectors are radially pliable to adapt to the conical internal thread (10) of the spray body shaft (9).

20. The spray body (8; 12') in accordance with claim 19,
**characterized in**
a) **that** the slits between the adjacent shaft sectors are filled with an elastic and/or vibration damping material, and/or
b) **that** on the inner side of the slits a ring body (30) is inserted that seals the slits, and/or
c) **that** ribs (31) engagable in the slits are formed on the ring body (30).

21. The spray body (12; 12') in accordance with any one of claims 16 to 20,
**characterized in**
a) **that** the spray body (12; 12') has a mounting shaft which in the mounted state is introduced into a hollow inner contour of the spray body shaft, and/or
b) **that** the mounting shaft has the first attaching structure (13') and the second attaching structure (24), and/or
c) **that** the first thread (13') and the second thread (24) are arranged coaxially to each other, and/or
d) **that** the first thread (13') is an external thread to form a screw connection with a correspondingly adapted internal thread (10') on the hollow inner contour of the spray body shaft (9'), and the second thread (24) is an external thread to form a screw connection with a correspondingly adapted internal thread (25; 25') on the throw-off securing element (ASE; ASE').

22. The spray body (12; 12') in accordance with any one of claims 16 to 21, **characterized in**
**that** the locking or friction element (16; 16'; 16'') is provided on the mounting shaft of the spray body (12) or on the throw-off securing element (ASE; ASE').

23. The spray body (12) in accordance with any one of claims 16 to 22,
**characterized in**
a) **that** the mounting shaft has an external thread (13; 13') to form a screw connection with a correspondingly adapted internal thread on the hollow inner contour of the spray body shaft, and/or
b) **that** the locking or friction connection between the complementary locking or friction elements of the throw-off securing element (ASE) or of the spray body (12; 12') and of the spray body shaft engages when the spray body (12; 12') or the throw-off securing element (ASE) and the spray body shaft are in a certain axial position relative to each other, and/or
c) **that** the spray body (12; 12') or the throw-off securing element (ASE) and the spray body shaft are, during creation of the screw connection, pulled axially relatively to each other into the locking position during producing the screw connection, without an axial pressing on force having to be exerted on the spray body (12) or the throw-off securing element (ASE).

24. The spray body (12) in accordance with any one of claims 16 to 23,
**characterized in**
a) **that** the locking or friction element of the throw-off securing element or on the mounting shaft of the spray body (12) is, in operation due to the centrifugal force and/or due to its inherent elasticity, pressed outwards with a certain radial pressing on force against the complementary locking or friction element on the inner contour of the spray body shaft, and
b) **that** the locking or fiction connection converts the radial pressing on force into an axial attraction force to clamp the spray body (12) or the throw-off securing element axially to the spray body shaft.

25. The spray body (12) in accordance with any one of claims 16 to 24,
**characterized in**
a) **that** the locking or friction element (16; 16'; 16") is at least one elastically resilient tongue (14; 14'; 14''), and/or
b) **that** the locking or friction elements are elastic tongues (14; 14'; 14") and/or elastically resilient tongues (14; 14'; 14"), and/or
c) **that** during operation the tongues (14; 14'; 14") are pressed radially outwards due to the centrifugal forces occurring during operation, and/or
d) **that** the least one locking or friction element (16; 16'; 16") is provided on or at least close the free end of at least one tongue and/or projects outwards, and/or
e) **that** the locking or friction elements (16; 16'; 16") are provided to be moved during operation radially outwards into at least two circular arc-shaped grooves or pockets (26) on the inner contour of the spray body shaft (9') due to the centrifugal forces occurring during operation, and/or
f) **that** the locking or friction connection is provided to be released in the absence of centrifugal force, and/or
g) **that** in the absence of centrifugal force the locking or friction element on the inner contour of the spray body shaft and the locking or friction element (16; 16'; 16'') of the throw-off securing element (ASE; ASE') or of the spray body (12; 12') are not in contact, and/or
h) **that** the locking or friction connection is provided to act in the axial direction and/or in the circumferential direction, and/or
i) **that** the at least one tongue (14; 14'; 14") and/or the at least one locking or friction element (16; 16'; 16'') is formed in accordance with the characterising portion of any one of claims 32 to 35.

26. The spray body (12; 12') in accordance with any one of claims 16 to 25, **characterized in**
a) **that** the throw-off securing element (ASE; ASE') and/or the tongues (14; 14'; 14") are made of plastic or metal, and/or
b) **that** at least a part of the remainder of the spray body (12; 12') or the substantially entire remainder of the spray body (12; 12') is made of metal, and/or
c) **that** the throw-off securing element (ASE; ASE') is formed in accordance with any one of claims 31 to 36.

27. The spray body (17) in accordance with claim 16,
**characterized in**
a) **that** the fastening device has a central clamping screw (21) which is arranged in the spray body (17) coaxially with regard to the axis of rotation of the bell cup and
b) **that** the central clamping screw (21) has an external thread to form a screw connection (22) with a correspondingly adapted internal thread on the hollow inner contour of the spray body shaft (18), and
c) **that** the spray body (17) has an axially passing bore for passing through the clamping screw (21), and
d) **that** the spray body (17) has an axial stop (23) for the clamping screw (21) to clamp the spray body (17) axially to the spray body shaft (18) by means of the clamping screw (21).

28. The spray body (17) in accordance with claim 27,
**characterized in that** the spray body (17) has a rotation securement (19) which in the mounted state connects the spray body (17) to the spray body shaft (18) in a manner secured against rotation.

29. The spray body (17) in accordance with claim 28,
**characterized in**
a) **that** the rotation securement (19) has a receiving bore arranged on the front side and extending axially, wherein in the mounted state a correspondingly adapted axially extending pin on the front side of the spray body shaft (18) engages in the receiving bore, or
b) **that** the rotation securement (19) has a pin arranged on the front side and extending axially, wherein in the mounted state the pin engages in a correspondingly adapted axially extending receiving bore in the front side of the spray body shaft (18).

30. The spray body (17) in accordance with any one of claims 16 to 29,
**characterized in**
a) **that** the clamping screw is hollow, and/or
b) **that** the spray body (⊥/) has a distributor disk for distributing the coating material to be applied, the distributor disk being attached to the clamping screw (21).

31. A throw-off securing element (ASE; ASE') for throw-off securement of a spray body (12') for a rotary atomiser, preferably a spray body (12') in accordance with any one of claims 16 to 30, **characterized in**
a) **that** the throw-off securing element (ASE; ASE') comprises, in addition to a fastening means (25; 25') to mount the throw-off securing element (ASE; ASE') on the spray body (12'), a fastening device,
b) **that** the fastening device comprises at least one locking or friction element (16'; 16") provided to form with at least one complementary locking or friction element on an inner contour of a rotatable spray body shaft (9'), particularly a bell cup shaft of the rotary atomisers, onto which the spray body (12') can be mounted, a locking or friction connection which is created and/or strengthened during operation due to the centrifugal force occurring during operation, and
c) **that** the at least one locking or friction element (16'; 16") is arranged on at least one elastic tongue (14'; 14") which extends essentially circular arc shaped.

32. The throw-off securing element in accordance with claim 31, **characterized in**
a) **that** at least one locking or friction element (16'; 16") is arranged on a plurality of elastic tongues (14'; 14"), and/or
b) **that** the at least one elastic tongue (14'; 14") is a elastically resilient tongue (14'; 14"), and/or
c) **that** the at least one tongue (14") has a supported end (E1) and a tree end (E2) which are spaced apart from each other in the circumferential direction of the throw-off securing element (ASE'), and/or
d) **that** the tongues (14') are arranged around the circumference of the base part (28) and are separated from one another by intermediate spaces(27), and/or
e) **that** during operation the at least one tongue (14'; 14") moves radially outwards due to the centrifugal forces occurring during operation, and/or
f) **that** the locking or friction connection is released in the absence of centrifugal force, and/or that in the absence of centrifugal force the locking or friction element (26) on the inner contour of the spray body shaft (9') and the locking or friction element (16'; 16") of the throw-off securing element (ASE; ASE') are not in contact, and/or
g) **that** the locking or friction connection is provided to act in the axial direction and/or in the circumferential direction, and/or
h) **that** the locking or friction elements (16; 16'; 16") are provided to be moved during operation radially outwards into at least two circular arc-shaped grooves or pockets (26) on the inner contour of the spray body shaft (9') due to the centrifugal forces occurring during operation.

33. The throw-off securing element in accordance with any one of claims 31 or 32, **characterized in**
a) **that** the base part (28) is a ring part, and/or
b) **that** the base part (28) connects the tongues (14') to each other, and/or
c) **that** the throw-off securing element (ASE) comprises at least one projection (29) which projects substantially axially from the base part (28) and on which the fastening means (25) is provided, and/or
d) **that** the least one tongue (14') and the at least one projection extend from the base part (28) in opposite directions, and/or
e) **that** the fastening means (25; 25') is a thread, particularly an external thread, and/or
f) **that** at its free end or at least close to its free end the at least one tongue (14') has a projection arranged radially inwards and/or in the circumferential direction to increase the weight, and/or
g) **that** the at least one locking or friction element (16; 16'; 16") is arranged on the free end or at least close to the free end of at least one tongue (14'; 14") and/or projects outwards, and/or
h) **that** the locking or friction element (16") has a wedge-shaped section, and/or
i) **that** the locking or friction element (16") and/or the at least one tongue (14") at its free end (E2) or at least close to its free end (E2) projects outwards over a circular lateral surface (MF) of the throw-off securing element (ASE).

34. The throw-off securing element in accordance with any one of claims 31 to 33, **characterized in that** at least one tongue (14")
a) extends substantially in the circumferential direction of the throw-off securing element (ASE') and/or circular arc-shaped, and/or
b) extends in a plane substantially perpendicular to the middle axis (MA) of the throw-off securing element (ASE'), and/or
c) is provided to extend at least partially in a circular lateral surface (MF) of the throw-off securing element (ASE'), and/or
d) is provided to be received and/or supported in a circular lateral surface (MF) of the throw-off securing element (ASE'), and/or
e) is formed by slits in the circular lateral surface (MF) of the throw-off securing element (ASE'), and/or
f) comprises a free end (E2) and a supported end (E1) in a plane substantially perpendicular to the middle axis (MA) of the throw-off securing element (ASE'), and/or
g) is provided to move and/or to project substantially spiral arm shaped and/or substantially circular arc shaped outwards from the lateral surface (MF) of the throw-off securing element (ASE') during operation due to the centrifugal forces occurring during operation.

35. The throw-off securing element in accordance with any one of claims 31 to 34, **characterized in**
a) **that** the tongues (14") are separated from each other by a circular lateral surface (MF) of the throw-off securing element(ASE'), and/or
b) **that** the throw-off securing element (ASE') is substantially tubular and/or comprises a substantially circular lateral surface (MF), and/or
c) **that** the throw-off securing element (ASE') has an outwardly projecting collar (32) at an end portion or at least close to an end portion, and/or
d) **that** the throw-off securing element (ASE; ASE') comprises a ring body (30) which is provided to be arranged on the inside of the throw-off securing element (ASE; ASE').

36. The throw-off securing element in accordance with any one of claims 31 to 35, **characterized in**
a) **that** the throw-off securing element (ASE; ASE'), and/or
b) the at last one tongue (14; 14'; 14" and/or the at
least one locking or friction element (16; 16'; 16") is made of plastic or metal.

37. A rotary atomiser with
a) a spray body shaft (2; 9; 9'; 18) in accordance with any one of claims 1 to 15, and/or
b) a spray body (8; 12; 12'; 17) in accordance with any one of claims 16 to 30 mounted on the spray body shaft (2; 9; 9'; 18), and/or
c) a throw-off securing element (ASE; ASE') in accordance with any one of claims 31 to 36.

38. A painting installation with at least one rotary atomiser in accordance with claim 37.

## Revendications

1. Arbre de corps de pulvérisation (2 ; 9 ; 9' ; 18), plus particulièrement arbre de plateau à cloche, pour un pulvérisateur rotatif, un corps de pulvérisation (8 ; 12 ; 12' ; 17), plus particulièrement un plateau à cloche, pouvant être monté sur l'arbre de corps de pulvérisation rotatif (2 ; 9 ; 9', 18),
a) l'arbre de corps de pulvérisation (2 ; 9 ; 9', 18) comprenant, en plus d'une liaison vissée, afin de monter le corps de pulvérisation (8 ; 12 ; 12' ; 17) sur l'arbre de corps de pulvérisation (2 ; 9 ; 9', 18), un dispositif de fixation (3 ; 10 ; 10', 14, 15, 16 ; 19, 21 ; 26),
b) le dispositif de fixation comprenant au moins un élément d'encliquetage ou de friction sur un contour interne de l'arbre de corps de pulvérisation, afin de former, avec au moins un élément d'encliquetage ou de friction complémentaire (16; 16'; 16"), qui est disposé sur une tige de montage du corps de pulvérisation (12) pour une protection anti-éjection du corps de pulvérisation (12') ou sur un élément de protection anti-éjection (ASE; ASE') pour la protection anti-éjection du corps de pulvérisation (12'), qui a lieu et/ou est renforcée du fait des forces centrifuges apparaissant lors du fonctionnement, **caractérisé en ce que** l'élément d'encliquetage ou de friction complémentaire (16 ; 16' ; 16") comprend au moins une languette élastique (14 ; 14' ; 14") et **en ce que** l'au moins un élément d'encliquetage ou de friction comprend, au niveau contour interne de de l'arbre du corps de pulvérisation (9') au moins deux poches ou rainures en forme d'arcs de cercle (26).

2. Arbre de corps de pulvérisation (2) selon la revendication 1, **caractérisé en ce que** le dispositif de fixation (3) comprend un dispositif de serrage, plus particulièrement un dispositif de serrage polygonal, afin d'établir une liaison par serrage entre le corps de pulvérisation et l'arbre du corps de pulvérisation (2).

3. Arbre de corps de pulvérisation (2 ; 9 ; 18) selon la revendication 2, **caractérisé en ce que**
a) l'arbre de corps de pulvérisation (2) présente un contour interne creux dans lequel une tige de montage (4) du corps de pulvérisation peut être inséré axialement, afin de monter le corps de pulvérisation sur l'arbre de corps de pulvérisation (2) et
b) le contour interne de l'arbre de corps de pulvérisation (2) peut être déformé élastiquement au moyen du dispositif de serrage entre une position neutre non sollicitée mécaniquement et une position de montage sollicitée mécaniquement et
c) le contour interne de l'arbre de corps de pulvérisation (2) correspond, dans l'état de montage sollicité mécaniquement, globalement au contour externe de la tige de montage (4), de façon à ce que la tige de montage (4) du corps de pulvérisation puisse être insérée dans le contour interne de l'arbre du corps de pulvérisation (2) et
d) le contour interne de l'arbre du corps de pulvérisation (2) est différent, dans l'état neutre non sollicité mécaniquement, du contour externe de la tige de montage (4), de façon à ce que la tige de montage (4) du corps de pulvérisation ne puisse pas être inséré dans le contour interne, ce qui, dans l'état monté du corps de pulvérisation, conduit à une serrage mécanique entre le contour interne de l'arbre du corps de pulvérisation (2) et le contour externe de la tige de montage (4).

4. Arbre de corps de pulvérisation (2) selon la revendication 2, **caractérisé en ce que**
a) le dispositif de serrage (3) comprend au moins un alésage de serrage (5, 6), dans lequel une vis de serrage peut être vissée, le contour interne de l'arbre du corps de pulvérisation (2) étant déformé, lors du vissage de la vis de serrage, de la position neutre vers la position de montage et/ou
b) l'alésage de serrage (5, 6) s'étend dans le plan de rotation de l'arbre de corps de pulvérisation (2) et/ou à une certaine distance de l'axe de rotation.

5. Arbre de corps de pulvérisation (2) selon la revendication 3 ou 4, **caractérisé en ce que**
a) le contour interne de l'arbre du corps de pulvérisation (2) est polygonal dans l'état neutre et globalement cylindrique dans l'état de montage et/ou
b) le contour externe de la tige de montage (4) du corps de pulvérisation est serré, de manière linéaire, avec le contour interne de l'arbre du corps de pulvérisation (2).

6. Arbre de corps de pulvérisation (9) selon la revendication 1, **caractérisé en ce que**
a) l'arbre du corps de pulvérisation (9) présente, pour le montage du corps de pulvérisation (8), un contour interne creux avec un filetage interne (10) et
b) le filetage interne (10) de l'arbre du corps de pulvérisation (9) s'élargit, sur la longueur du filetage, en direction du corps de pulvérisation (8), plus particulièrement de manière conique, de façon à ce que le dispositif de fixation présente un élargissement conique du filetage interne (10).

7. Arbre de corps de pulvérisation (9) selon la revendication 6, **caractérisé en ce que**
a) le filetage interne (10) présente un diamètre nominal mesuré sur les pointes des dents, qui est globalement constant sur la longueur du filetage et
b) le filetage interne (10) présente un diamètre de noyau mesuré sur les creux des dents, qui s'élargit sur la longueur du filetage en direction du corps de pulvérisation (8).

8. Arbre de corps de pulvérisation (9) selon la revendication 7, **caractérisé en ce que**
a) les pointes des dents du filetage interne (10) se trouvent sur une première ligne de liaison,
b) les creux des dents du filetage interne (10) se trouvent sur une deuxième ligne de liaison,
c) la première ligne de liaison et la deuxième ligne de liaison forment un angle supérieur à 0,1°, 0,2°, 0,3°, 0,4° ou 0,5° et/ou
d) la première ligne de liaison et la deuxième ligne de liaison forment un angle inférieur à 6°, 5°, 4°, 3° ou 2°.

9. Arbre de corps de pulvérisation (9) selon la revendication 7, **caractérisé en ce que** le diamètre nominal et le diamètre de noyau du filetage interne (10) s'élargissent de manière égale en direction du corps de pulvérisation (8).

10. Arbre de corps de pulvérisation (9) selon la revendication 9, **caractérisé en ce que**
a) le filetage interne (10) s'élargit, avec le diamètre de noyau et le diamètre nominal, avec un angle de cône déterminé par rapport au corps de pulvérisation (8) et/ou
b) l'angle de cône est supérieur à 0,1°, 0,2°, 0,3°, 0,4° ou 0,5° et/ou
c) l'angle de cône est inférieur à 5°, 4°, 3° ou 2°.

11. Arbre de corps de pulvérisation selon la revendication 1, **caractérisé en ce que**
a) l'arbre du corps de pulvérisation présente un contour interne creux, dans lequel une tige de montage du corps de pulvérisation (12) peut être insérée axialement afin de monter le corps de pulvérisation (12) sur l'arbre du corps de pulvérisation et/ou
b) la liaison par encliquetage ou par friction est conçu pour agir dans la direction axiale et/ou dans la direction circonférentielle et/ou
c) l'élément d'encliquetage ou de friction (26) est prévu sur le contour interne de l'arbre du corps de pulvérisation (9') pour former un appui d'encliquetage dans la direction axiale et/ou dans la direction circonférentielle et/ou
d) l'élément d'encliquetage ou de friction comprend, au niveau du contour interne de l'arbre du corps de pulvérisation, une portion cunéiforme.

12. Arbre de corps de pulvérisation selon la revendication 1 ou 11, **caractérisé en ce que**
a) l'arbre du corps de pulvérisation comprend un filetage interne afin d'établir, avec un filetage externe (13) correspondant sur la tige de montage du corps de pulvérisation (12), une liaison vissée et
b) la liaison par encliquetage ou par friction s'emboîte entre les éléments d'encliquetage ou de friction complémentaires du corps de pulvérisation (12) ou de l'élément de protection anti-éjection (ASE) et l'arbre du corps de pulvérisation, lorsque le corps de pulvérisation (12) et l'arbre du corps de pulvérisation se trouvent dans une position d'encliquetage axiale déterminée l'un par rapport à l'autre et
c) le corps de pulvérisation (12 ; 12') et l'arbre du corps de pulvérisation sont tirés, lors de l'établissement de la liaison vissée, dans une direction axiale l'un par rapport à l'autre, sans qu'une force de compression axiale doive être exercée sur le corps de pulvérisation (12, 12').

13. Arbre de corps de pulvérisation selon l'une des revendications 1, 11 ou 12, **caractérisé en ce que**
a) l'élément d'encliquetage ou de friction (16 ; 16') de l'élément de protection anti-éjection (ASE) ou sur la tige de montage du corps de pulvérisation (12) est comprimé, lors du fonctionnement, du fait de la force centrifuge et/ou du fait de son élasticité propre, avec une force de compression radiale détermine vers l'extérieur contre l'élément d'encliquetage ou de friction complémentaire sur le contour interne de l'arbre du corps de pulvérisation et
b) la liaison par encliquetage ou par friction convertit la force de compression radiale en une force de traction axiale afin de serrer le corps de pulvérisation (12) ou l'élément de protection anti-éjection (ASE) axialement avec l'arbre du corps de pulvérisation.

14. Arbre de corps de pulvérisation (18) selon la revendication 1, **caractérisé en ce que**
a) l'arbre du corps de pulvérisation (18) comprend un contour interne creux avec un filetage interne (22), dans lequel une vis de serrage centrale (21) peut être vissée avec un filetage externe afin de monter le corps de pulvérisation (17) sur l'arbre du corps de pulvérisation (18) et
b) le dispositif de fixation comprend une protection anti-rotation (19) qui est disposée sur l'arbre du corps de pulvérisation (18) et qui relie le corps de pulvérisation (17) dans l'état monté avec l'arbre de corps de pulvérisation (18) sans possibilité de rotation et/ou
c) le contour interne de l'arbre du corps de pulvérisation (18) comprend un épaulement dépassant vers l'intérieur, sur le côté intérieur duquel se trouve le filetage interne (22) pour la vis de serrage centrale (17) et/ou
d) le filetage interne (22) présente, pour la vis de serrage centrale (17), un diamètre nettement inférieur à celui de l'arbre du corps de pulvérisation (2 ; 9 ; 18).

15. Arbre de corps de pulvérisation (18) selon la revendication 14, **caractérisé en ce que**
a) la protection anti-rotation (19) comprend une goupille disposée sur le côté frontal et s'étendant axialement qui, dans l'état monté, s'emboîte dans un alésage de logement correspondant s'étendant axialement dans le corps de pulvérisation (17), ou
b) la protection anti-rotation (19) comprend un alésage de logement disposé sur le côté frontal et s'étendant axialement, dans lequel, dans l'état monté, une goupille correspondant s'étendant axialement s'emboîte sur le corps de pulvérisation (17).

16. Corps de pulvérisation (8 ; 12 ; 12' ; 17), plus particulièrement plateau à cloche, pour un pulvérisateur rotatif, le corps de pulvérisation (8 ; 12 ; 12' ; 17) pouvant être monté sur un arbre de corps de pulvérisation rotatif (2; 9; 9'; 18), plus particulièrement sur un plateau à cloche, du pulvérisateur rotatif,
a) le corps de pulvérisation (8 ; 12 ; 12' ; 17) comprend, en plus d'une liaison vissée, afin de monter le corps de pulvérisation (8 ; 12 ; 12' ; 17) sur l'arbre du corps de pulvérisation (2 ; 9 ; 9' ; 18), ou, au lieu de la liaison vissée, un dispositif de de fixation,
b) le dispositif de fixation comprenant au moins un élément d'encliquetage ou de friction (16 ; 16' ; 16"), afin de former, avec au moins un élément d'encliquetage ou de friction complémentaire, sur un contour interne de l'arbre du corps de pulvérisation, une liaison par encliquetage ou par friction qui est établie et/ou renforcée du fait des forces centrifuges apparaissant lors du fonctionnement, **caractérisé en ce que** l'élément d'encliquetage ou de friction (16 ; 16' ; 16") comprend au moins une languette élastique (14 ; 14' ; 14") qui s'étend globalement sous la forme d'un arc de cercle.

17. Corps de pulvérisation (12'), plus particulièrement plateau à cloche, pour un pulvérisateur rotatif, le corps de pulvérisation (12') pouvant être monté sur un arbre de corps de pulvérisation rotatif (9'), plus particulièrement sur un arbre de plateau à cloche, du pulvérisateur rotatif,
a) le corps de pulvérisation (12') comprenant, en plus d'une première structure de fixation (13'), afin de monter le corps de pulvérisation (12') sur l'arbre du corps de pulvérisation (9'),
b) une deuxième structure de fixation (24) afin de monter un élément de protection anti-éjection (ASE ; ASE') comprenant un dispositif de fixation pour la protection anti-éjection du corps de pulvérisation (12') et/ou, sur la deuxième structure de fixation (24), un élément de protection anti-éjection (ASE ; ASE') comprenant un dispositif de fixation étant prévu pour la protection anti-éjection du corps de pulvérisation (12'),
**caractérisé en ce que**
c) la première structure de fixation (13') est un premier filetage et la deuxième structure de fixation (24) est un deuxième filetage et
d) le dispositif de fixation comprend au moins un élément d'encliquetage ou de friction (16 ; 16' ; 16") afin de former, avec au moins un élément d'encliquetage ou de friction complémentaire, une liaison par encliquetage ou par friction, qui est établie et/ou renforcée du fait des forces centrifuges apparaissant lors du fonctionnement, l'élément d'encliquetage ou de friction (16; 16'; 16") comprenant au moins une languette élastique (14 ; 14' ; 14") qui s'étend globalement sous la forme d'un arc de cercle.

18. Corps de pulvérisation selon la revendication 16, **caractérisé en ce que**
a) le corps de pulvérisation comprend une tige de montage (4) qui est insérée, dans l'état monté, dans un contour interne creux de l'arbre du corps de pulvérisation (2) et est relié, par un dispositif de serrage (3, 5, 6), avec l'arbre du corps de pulvérisation (2) et/ou
b) la tige de montage (4) présente une section extérieur cylindrique et/ou
c) la tige de montage (4) présente un contour externe sans filetage.

19. Corps de pulvérisation (8 ; 12') selon la revendication 16 ou 17, **caractérisé en ce que**
a) le corps de pulvérisation (8 ; 12') comprend une tige de montage (11) qui est insérée, dans l'état monté, dans un contour interne creux de l'arbre du corps de pulvérisation (9 ; 9') et/ou
b) la tige de montage (11) comprend un filetage externe qui est vissé, dans l'état monté, avec un filetage interne (10 ; 10') de l'arbre du corps de pulvérisation (9 ; 9) ;
c) la tige de montage (11) comprend plusieurs fentes s'étendant axialement, qui partent du côté frontal de la tige de montage (11) et divisent la tige de montage (11), au niveau de son extrémité distale, en plusieurs secteurs de tige et/ou
d) les secteurs de tige sont flexibles radialement afin de s'adapter au filetage interne conique (10) de l'arbre du corps de pulvérisation (9).

20. Corps de pulvérisation (8 ; 12') selon la revendication 19, **caractérisé en ce que**
a) les fentes sont remplies, entre des secteurs de tige adjacents, d'un matériau élastique et/ou amortissant les vibrations et/ou
b) à l'intérieur des fentes, est inséré un corps annulaire (30) étanchéifiant les fentes et/ou
c) des nervures (31) s'emboîtant dans les fentes sont formées sur le corps annulaire (30).

21. Corps de pulvérisation (12 ; 12') selon l'une des revendications 16 à 20, **caractérisé en ce que**
a) le corps de pulvérisation (12 ; 12') comprend une tige de montage qui est insérée, dans l'état monté, dans un contour interne creux de l'arbre du corps de pulvérisation et/ou
b) la tige de montage comprend la première structure de fixation (13') et la deuxième structure de fixation (24) et/ou
c) le premier filetage (13') et le deuxième filetage (24) sont disposés de manière coaxiale l'un par rapport à l'autre et/ou
d) le premier filetage (13') est un filetage externe afin de former, avec un filetage interne (10') correspondant, sur le contour interne creux de l'arbre du corps de pulvérisation (9'), une liaison vissée et le deuxième filetage (24) est un filetage externe, afin de former, avec un filetage interne (25 ; 25') correspondant, sur l'élément de protection anti-éjection (ASE ; ASE').

22. Corps de pulvérisation (12 ; 12') selon l'une des revendications 16 à 21, **caractérisé en ce que** l'élément d'encliquetage ou de friction (16 ; 16' ; 16") est disposé sur la tige de montage du corps de pulvérisation (12) ou sur l'élément de protection anti-éjection (ASE ; ASE').

23. Corps de pulvérisation (12) selon l'une des revendications 16 à 22, **caractérisé en ce que**
a) la tige de montage comprend un filetage externe (13 ; 13'), afin de former, avec un filetage interne correspondant sur le contour interne de l'arbre du corps de pulvérisation, une liaison vissée et/ou
b) la liaison par encliquetage ou par friction s'emboîte entre les éléments d'encliquetage ou de friction de l'élément de protection anti-éjection (ASE) ou du corps de pulvérisation (12 ; 12') et de l'arbre du corps de pulvérisation lorsque le corps de pulvérisation (12 ; 12') ou l'élément de protection anti-éjection (ASE) et l'arbre du corps de pulvérisation se trouvent dans une position radiale déterminée l'un par rapport à l'autre et/ou
c) le corps de pulvérisation (12 ; 12') ou l'élément de protection anti-éjection (ASE) et l'arbre du corps de pulvérisation sont tirés, lors de l'établissement de la liaison vissée, l'un par rapport à l'autre, dans la direction axiale vers la position d'encliquetage sans qu'une force de compression axiale ne doive être exercée sur le corps de pulvérisation (12) ou sur l'élément de protection anti-éjection (ASE).

24. Corps de pulvérisation (12) selon l'une des revendications 16 à 23, **caractérisé en ce que**
a) l'élément d'encliquetage ou de friction de l'élément de protection anti-éjection ou sur la tige de montage du corps de pulvérisation (12) est comprimé, lors du fonctionnement, du fait de la force centrifuge et/ou du fait de son élasticité propre, avec une force de compression radiale vers l'extérieur contre l'élément d'encliquetage ou de friction sur le contour interne de l'arbre du corps de pulvérisation et
b) la liaison par encliquetage ou par friction convertit la force de compression radiale en une force de traction axiale afin de serrer le corps de pulvérisation (12) ou l'élément de protection anti-éjection axialement avec l'arbre du corps de pulvérisation.

25. Corps de pulvérisation (12) selon l'une des revendications 16 à 24, **caractérisé en ce que**
a) l'élément d'encliquetage ou de friction (16 ; 16' ; 16") est au moins une languette à flexion élastique (14 ; 14 ; 14") et/ou
b) les éléments d'encliquetage ou de friction sont des languettes élastiques (14 ; 14' ; 14") et/ou des languettes à flexion élastique (14 ; 14' ; 14") et/ou
c) les languettes (14 ; 14' ; 14") sont comprimées radialement vers l'extérieur lors du fonctionnement du fait des forces centrifuges apparaissant lors du fonctionnement et/ou
d) l'au moins un élément d'encliquetage ou de friction (16 ; 16' ; 16") est prévu au niveau de l'extrémité libre ou au moins à proximité de l'extrémité libre, d'au moins une languette et/ou dépasse vers l'extérieur et/ou
e) les éléments d'encliquetage ou de friction (16 ; 16' ; 16") sont prévus pour être déplacés, lors du fonctionnement, du fait des forces centrifuges apparaissant lors du fonctionnement, radialement vers l'extérieur dans au moins deux rainure en forme d'arcs de cercle ou poches (26) sur le contour interne de l'arbre du corps de pulvérisation (9') et/ou
f) la liaison par encliquetage ou par friction est conçu pour être détachée lorsque la force centrifuge n'est plus exercée et/ou
g) lorsque la force centrifuge n'est plus exercée, l'élément d'encliquetage ou de friction (16 ; 16' ; 16") sur le contour interne de l'arbre du corps de pulvérisation et l'élément d'encliquetage ou de friction (ASE ; ASE') ou du corps de pulvérisation (12 ; 12') ne sont pas en contact et/ou
h) la liaison par encliquetage ou par friction est conçu pour agir dans la direction axiale et/ou la direction circonférentielle et/ou
i) l'au moins une languette (14 ; 14' ; 14") et/ou l'au moins un élément d'encliquetage ou de friction (16 ; 16' ; 16") sont conçus selon la partie caractérisante de l'une des revendications 32 à 35.

26. Corps de pulvérisation (12 ; 12') selon l'une des revendications 16 à 25, **caractérisé en ce que**
a) l'élément de protection anti-éjection (ASE ; ASE') et/ou les languettes (14 ; 14' ; 14") sont constitués de matière plastique ou de métal et/ou
b) au moins une partie restante du corps de pulvérisation (12 ; 12') ou globalement l'ensemble de la partie restante du corps de pulvérisation (12 ; 12') est constitué de métal et/ou
c) l'élément de protection anti-éjection (ASE ; ASE') est conçu selon l'une des revendications 31 à 36.

27. Corps de pulvérisation (17) selon la revendication 16, **caractérisé en ce que**
a) le dispositif de fixation comprend une vis de serrage centrale (21) qui est disposée dans le corps de pulvérisation (17) coaxialement par rapport à l'axe de rotation du plateau à cloche et
b) la vis de serrage centrale (21) comprend un filetage externe afin de former, avec le filetage interne correspondant sur le contour interne creux de l'arbre du corps de pulvérisation (18), une liaison vissée (22) et
c) le corps de pulvérisation (17) comprend un alésage axial traversant pour le passage de la vis de serrage (21) et
d) le corps de pulvérisation (17) comprend une butée axiale (23) pour la vis de serrage (21) afin de serrer le corps de pulvérisation (17) à l'aide de la vis de serrage (21) axialement avec l'arbre du corps de pulvérisation (18).

28. Corps de pulvérisation (17) selon la revendication 27, **caractérisé en ce que** le corps de pulvérisation (17) comprend une protection anti-rotation (19) qui relie le corps de pulvérisation (17) dans l'état monté avec l'arbre de corps de pulvérisation (18) sans possibilité de rotation.

29. Corps de pulvérisation (17) selon la revendication 28, **caractérisé en ce que**
a) la protection anti-rotation (19) comprend un alésage de logement, disposé sur le côté frontal et s'étendant axialement dans le corps de pulvérisation (17), dans lequel, dans l'état monté, une goupille correspondante s'étendant axialement s'emboîte sur le côté frontal de l'arbre du corps de pulvérisation (18) ou
b) la protection anti-rotation (19) comprend une goupille disposée sur le côté frontal et s'étendant axialement qui, dans l'état monté, s'emboîte dans un alésage de logement correspondant s'étendant axialement sur le côté frontal de l'arbre du corps de pulvérisation (18).

30. Corps de pulvérisation (17) selon l'une des revendications 16 à 29, **caractérisé en ce que**
a) la vis de serrage est creuse et/ou
b) le corps de pulvérisation (17) comprend une rondelle de répartition afin de répartir le produit de revêtement à appliquer, la rondelle de répartition étant fixée à la vis de serrage (21).

31. Élément de protection anti-éjection (ASE ; ASE') pour la protection anti-éjection d'un corps de pulvérisation (12') pour un pulvérisateur rotatif, de préférence un corps de pulvérisation (12') selon l'une des revendications 16 à 30, **caractérisé en ce que**
a) l'élément de protection anti-éjection (ASE ; ASE') comprend, en plus d'un moyen de fixation (25 ; 25'), un dispositif de fixation afin de monter l'élément de protection anti-éjection (ASE ; ASE') sur le corps de pulvérisation (12'),
b) le dispositif de fixation comprend au moins un élément d'encliquetage ou de friction (16' ; 16") qui est conçu pour former, avec au moins un élément d'encliquetage ou de friction sur un contour interne d'un arbre du corps de pulvérisation (9') rotatif, plus particulièrement d'un arbre de plateau à cloche du pulvérisateur rotatif, sur lequel le corps de pulvérisation (12') peut être monté, une liaison par encliquetage ou par friction, qui est établie et/ou renforcée lors du fonctionnement du fait de la force centrifuge apparaissant lors du fonctionnement et
c) l'au moins un élément d'encliquetage ou de friction (16' ; 16") est disposé sur au moins une languette élastique (14' ; 14"), qui s'étend globalement sous la forme d'un arc de cercle.

32. Élément de protection anti-éjection selon la revendication 31, **caractérisé en ce que**
a) au moins un élément d'encliquetage ou de friction (16' ; 16") est disposé sur plusieurs languettes élastiques (14' ; 14") et/ou
b) l'au moins une languette élastique (14' ; 14") est une languette à flexion élastique (14' ; 14") et/ou
c) l'au moins une languette (14") comprend une extrémité logée (E1) et une extrémité libre (E2), qui sont éloignées l'une de l'autre dans la direction circonférentielle de l'élément de protection anti-éjection (ASE') et/ou
d) les languettes (14') sont disposées de manière répartie sur la circonférence de la partie de base (28) et séparées les unes des autres par des espaces intermédiaires (27) et/ou
e) l'au moins une languette (14' ; 14") dépasse radialement vers l'extérieur du fait des forces centrifuges apparaissant lors du fonctionnement et/ou
f) la liaison par encliquetage ou par friction est détachée si la force centrifuge n'est pas exercée et/ou l'élément d'encliquetage ou de friction (26) sur le contour interne de l'arbre du corps de pulvérisation (9') et l'élément d'encliquetage ou de friction (16' ; 16") de l'élément de protection anti-éjection (ASE ; ASE') ne sont pas en contact lorsque la force centrifuge n'est pas exercée et/ou
g) la liaison par encliquetage ou par friction est conçue pour agir dans la direction axiale et/ou dans la direction circonférentielle et/ou
h) les éléments d'encliquetage ou de friction (16 ; 16' ; 16") sont conçus pour être déplacés, lors du fonctionnement, du fait des forces centrifuges apparaissant lors du fonctionnement, radialement vers l'extérieur dans au moins deux rainures en forme d'arcs de cercle ou poches (26) sur le contour interne de l'arbre du corps de pulvérisation (9').

33. Élément de protection anti-éjection selon l'une des revendications 31 ou 32, **caractérisé en ce que**
a) la partie de base (28) est une partie annulaire et/ou
b) la partie de base (28) relie les languettes (14') entre elles et/ou
c) l'élément de protection anti-éjection (ASE) comprend au moins une saillie (29) qui dépasse de la partie de base (28) globalement de manière axiale et sur laquelle le moyen de fixation (25) est disposé et/ou
d) l'au moins une languette (14') et l'au moins une saillie (29) s'étendent à partir de la partie de base (28) dans des directions opposées et/ou
e) le moyen de fixation (25, 25') est un filetage, plus particulièrement un filetage externe et/ou
f) l'au moins une languette (14') comprend, au niveau de son extrémité libre ou au moins à proximité de son extrémité libre, une saillie disposée radialement vers l'intérieur et/ou dans la direction circonférentielle afin d'augmenter le poids et/ou
g) l'au moins un élément d'encliquetage ou de friction (16 ; 16' ; 16") est disposé au niveau de l'extrémité libre ou au moins à proximité de l'extrémité libre d'au moins une languette (14' ; 14") et/ou dépasse vers l'extérieur et/ou
h) l'élément d'encliquetage ou de friction (16") comprend une portion cunéiforme et/ou
i) l'élément d'encliquetage ou de friction (16") et/ou l'au moins une languette (14") dépasse, au niveau de son extrémité libre (E2) ou au moins à proximité de son extrémité libre (E2), vers l'extérieur à travers une surface externe circulaire (MF) de l'élément de protection anti-éjection (ASE).

34. Élément de protection anti-éjection selon l'une des revendications 31 à 33, **caractérisé en ce qu'**au moins une languette (14")
a) s'étend globalement dans la direction circonférentielle de l'élément de protection anti-éjection (ASE') et/ou en forme d'arc de cercle et/ou
b) s'étend dans un plan globalement perpendiculaire à la l'axe central (MA) de l'élément de protection anti-éjection (ASE') et/ou
c) est conçue pour s'étendre, au moins partiellement, dans une surface externe circulaire (MF) de l'élément de protection anti-éjection (ASE') et/ou
d) est conçue pour être logée et/ou stockée dans une surface externe circulaire (MF) de l'élément de protection anti-éjection (ASE') et/ou
e) est disposée dans des fentes dans la surface externe circulaire (MF) de l'élément de protection anti-éjection (ASE') et/ou
f) comprend une extrémité libre (E2) et une extrémité logée (E1) dans un plan globalement perpendiculaire à l'axe central (MA) de l'élément de protection anti-éjection (ASE') et/ou
g) est concue pour être déplacée et/ou pour dépasser, lors du fonctionnement, du fait des forces centrifuges apparaissant lors du fonctionnement globalement sous la forme de spirales et/ou globalement sous la forme d'arcs de cercle, hors de la surface externe (MF) de l'élément de protection anti-éjection (ASE') vers l'extérieur.

35. Élément de protection anti-éjection selon l'une des revendications 31 à 34, **caractérisé en ce que**
a) les languettes (14") sont séparées entre elles par une surface externe circulaire (MF) de l'élément de protection anti-éjection (ASE') et/ou
b) l'élément de protection anti-éjection (ASE') présente globalement une forme tubulaire et/ou comprend une surface externe (MF) globalement circulaire et/ou
c) l'élément de protection anti-éjection (ASE') comprend, au niveau d'une zone d'extrémité ou au moins à proximité d'une zone d'extrémité, un collet (32) dépassant vers l'extérieur et/ou
d) l'élément de protection anti-éjection (ASE ; ASE') comprend un corps annulaire (30) qui est conçu pour être disposé à l'intérieur de l'élément de protection anti-éjection (ASE ; ASE').

36. Élément de protection anti-éjection selon l'une des revendications 31 à 35, **caractérisé en ce que**
a) l'élément de protection anti-éjection (ASE ; ASE') et/ou
b) l'au moins une languette (14 ; 14' ; 14") et/ou l'au moins un élément d'encliquetage ou de friction (16 ; 16' ; 16") est constitué de matière plastique ou de métal.

37. Pulvérisateur rotatif avec
a) un arbre de corps de pulvérisation (2 ; 9 ; 9' ; 18) selon l'une des revendications 1 à 15 et/ou
b) un corps de pulvérisation (8 ; 12 ; 12' ; 17) monté sur l'arbre du corps de pulvérisation (2 ; 9 ; 9' ; 18) selon l'une des revendications 16 à 30 et/ou
c) un élément de protection anti-éjection (ASE ; ASE') selon l'une des revendications 31 à 36.

38. Installation de peinture avec au moins un pulvérisateur rotatif selon la revendication 37.
